# EUROPEAN PATENT APPLICATION

(11) **EP 3 156 465 A1**
(43) Date of publication of application: **19.04.2017**
(21) Application number: 15189946.5
(22) Date of filing: 15.10.2015
(51) Int. Cl.: C09J 7/02, B60R 13/02, C03C 27/04, E04B 1/38

(54) **MULTILAYER PRESSURE SENSITIVE ADHESIVE FOAM TAPE FOR OUTDOOOR APPLICATIONS**

(71) Applicant: 3M Innovative Properties Company, St. Paul, MN 55133-3427 (US)
(72) Inventor: Eckhardt, Doreen, 41453 Neuss (DE); Torre, Claudia, 41453 Neuss (DE); Sikora, Regina, 41453 Neuss (DE); Unverhau, Kerstin, 41453 Neuss (DE); Wieneke, Jan, 41453 Neuss (DE); Kuester, Frank, 41453 Neuss (DE); Heimink, Jan, 41453 Neuss (DE); Forster, Jan Daniel, 41453 Neuss (DE); Radek, Bettina, 41453 Neuss (DE); Chastek, Thomas Q, St. Paul, MN Minnesota 55133-3427 (US); DeVolder, Ross John, St. Paul, MN Minnesota 55133-3427 (US); Wang, Shujun S. J., St. Paul, MN Minnesota 55133-3427 (US); Waid, Robert Dennis, St. Paul, MN Minnesota 55133-3427 (US); Zoller, Panu K, St. Paul, MN Minnesota 55133-3427 (US); Willett, Peggy Sperl, St. Paul, MN Minnesota 55133-3427 (US); Gadbois, Gregory Bernard, St. Paul, MN Minnesota 55133-3427 (US); Del Unruh, Jeremy, St. Paul, MN Minnesota 55133-3427 (US); Bray, Steven Dean, St. Paul, MN Minnesota 55133-3427 (US); Williams, Jack Jefferson, St. Paul, MN Minnesota 55133-3427 (US); Chen, Zhong, St. Paul, MN Minnesota 55133-3427 (US)
(74) Representative: Gabriel, Kiroubagaranne

(57) **Abstract**

The present disclosure relates to a method of adhering a first part to a second part, wherein the first part and the second part are used for outdoor applications and comprise a thermoplastic or a thermosetting organic polymer. The present disclosure is also directed to a composite assembly comprising:
a) a first part and a second part used for outdoor applications and comprising a thermoplastic or a thermosetting organic polymer; and
b) a multilayer pressure sensitive adhesive foam tape as described in the present disclosure, wherein the first pressure sensitive adhesive layer is adhered to the first part, and the second pressure sensitive adhesive layer is adhered to the second part.

## Description

### Technical Field

The present disclosure relates generally to the field of adhesives, more specifically to the field of pressure sensitive adhesives (PSA). The present disclosure also relates to a method of adhering a first part to a second part, wherein the first part and the second part are used for outdoor applications and comprise a thermoplastic or a thermosetting organic polymer.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self-contained bonding system.

Pressure sensitive adhesives (PSAs) are well known to one of ordinary skill in the art, and according to the Pressure-Sensitive Tape Council, PSAs are known to possess properties including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

These requirements are assessed generally by means of tests which are designed to individually measure tack, adhesion (peel strength), and cohesion (shear holding power), as noted in A.V. Pocius in Adhesion and Adhesives Technology: An Introduction, 2nd Ed., Hanser Gardner Publication, Cincinnati, OH, 2002. These measurements taken together constitute the balance of properties often used to characterize a PSA.

With broadened use of pressure-sensitive adhesive tapes over the years, performance requirements have become more and more demanding. Shear holding capability, for example, which originally was intended for applications supporting modest loads at room temperature, has now increased substantially for many applications in terms of operating temperature and load. Indeed, many specific applications require pressure sensitive adhesives to support a load in high stress conditions such as e.g. exposure to intense weathering conditions or under intensive usage during which the pressure-sensitive adhesive tapes are subjected to high mechanical and/or chemical stress.

When used for outdoor or exterior applications, pressure sensitive adhesive tapes have to provide operability at various challenging conditions such as exposure to a wide temperature range, and in particular provide acceptable performance at extreme temperatures, such as e.g. high temperature up to 90°C or low temperatures down to - 40°C. Other challenging conditions in the context of the present disclosure include exposure to intense wind or rain, which may typically occur in transportation and construction market applications.

In modern transportation and construction market applications, the need to reduce the weight of component parts has led to increasing usage of composite and thermoplastic materials, which are known to be challenging substrates for adhesive bonding. In the automotive and aerospace manufacturing industry, a myriad of exterior parts are indeed made of the so-called LSE and MSE materials, i.e. substrates having respectively a low and a medium surface energy.

It is therefore a recognized and continuous challenge in the adhesive tapes industry to develop pressure sensitive adhesive tapes capable of providing excellent adhesion and outstanding cohesion properties to difficult-to-bond substrates, even under high stress conditions such as e.g. exposure to intense weathering conditions or under intensive usage.

Other advantages of the pressure sensitive adhesives and methods of the disclosure will be apparent from the following description.

### Summary

According to one aspect, the present disclosure relates to a method of adhering a first part to a second part, wherein the first part and the second part are used for outdoor applications and comprise a thermoplastic or a thermosetting organic polymer, and wherein the method comprises the steps of:
a) providing a multilayer pressure sensitive adhesive foam tape comprising:
   i. a polymeric foam layer comprising two major surfaces;
   ii. a first pressure sensitive adhesive layer adjacent to one major surface of the polymeric foam layer;
   iii. a second pressure sensitive adhesive layer adjacent to the polymeric foam layer on the major surface which is opposed to the major surface or the polymeric foam layer adjacent to the first pressure sensitive adhesive layer, and wherein the first pressure sensitive adhesive layer, the polymeric foam layer and the second pressure sensitive adhesive layer are superimposed;
b) adhering the first pressure sensitive adhesive layer to the first part; and
c) adhering the second part to the second pressure sensitive adhesive layer;
wherein the first pressure sensitive adhesive layer and the second pressure sensitive adhesive layer both have a composition selected from either:
A) composition (1) comprising:
   a) 60 parts by weight or greater of a low Tg (meth)acrylate copolymer (component) comprising:
      i. C₁-C₃₂ (meth)acrylic acid ester monomer units;
      ii. optionally, acid functional ethylenically unsaturated monomer units;
      iii. optionally, non-acid functional, ethylenically unsaturated polar monomer units;
      iv. optionally, vinyl monomer units; and
      v. optionally, multifunctional (meth)acrylate monomer units, and
   b) up to 40 parts by weight of a high Tg (meth)acrylate copolymer having a weight average molecular weight (Mw) of above 20,000 Daltons, and comprising:
      i. high Tg (meth)acrylic acid ester monomer units;
      ii. optionally, acid functional ethylenically unsaturated monomer units;
      iii. optionally, low Tg (meth)acrylic acid ester monomer units;
      iv. optionally, non-acid functional, ethylenically unsaturated polar monomer units;
      v. optionally, vinyl monomer units;
      vi. optionally, a chlorinated polyolefinic (co)polymer; and
   c) optionally, up to 20 parts by weight of a hydrogenated hydrocarbon tackifier, based on 100 parts by weight of copolymers a) and b);
   or;
B) composition (2) comprising:
   a) a linear block copolymer of the formula R - (G)m, wherein m is 1 or 2;
   b) a multi-arm block copolymer of the formula Qn-Y, wherein:
      i. Q represents an arm of the multi-arm block copolymer and each arm independently has the formula G-R,
      ii. n represents the number of arms and is a whole number of at least 3; and
      iii. Y is the residue of a multifunctional coupling agent; wherein each R is a rubbery block comprising a polymerized conjugated diene, a hydrogenated derivative of a polymerized conjugated diene, or combinations thereof; and each G is a glassy block comprising a polymerized monovinyl aromatic monomer;
   c) a first high Tg tackifier having a Tg of at least 60 degrees C, wherein the first high Tg tackifier is primarily compatible with the rubbery blocks;
   d) a second high Tg tackifier having a Tg of at least 60 degrees C, wherein the second high Tg tackifier is primarily compatible with the glassy blocks; and
   e) at least one component selected from the group consisting of a low Tg tackifier, a plasticizer, and combinations thereof.

In another aspect, the present disclosure relates to a composite assembly comprising:
a) a first part and a second part used for outdoor applications and comprising a thermoplastic or a thermosetting organic polymer; and
b) a multilayer pressure sensitive adhesive foam tape as described above, wherein the first pressure sensitive adhesive layer is adhered to the first part, and the second pressure sensitive adhesive layer is adhered to the second part.

In still another aspect, the present disclosure relates to the use of a multilayer pressure sensitive adhesive foam tape as described above for adhering a first part to a second part, wherein the first part and the second part are used for outdoor applications and comprise a thermoplastic or a thermosetting organic polymer.

### Detailed description

According to one aspect, the present disclosure relates to a method of adhering a first part to a second part, wherein the first part and the second part are used for outdoor applications and comprise a thermoplastic or a thermosetting organic polymer, and wherein the method comprises the steps of:
a) providing a multilayer pressure sensitive adhesive foam tape comprising:
   i. a polymeric foam layer comprising two major surfaces;
   ii. a first pressure sensitive adhesive layer adjacent to one major surface of the polymeric foam layer;
   iii. a second pressure sensitive adhesive layer adjacent to the polymeric foam layer on the major surface which is opposed to the major surface or the polymeric foam layer adjacent to the first pressure sensitive adhesive layer, and wherein the first pressure sensitive adhesive layer, the polymeric foam layer and the second pressure sensitive adhesive layer are superimposed;
b) adhering the first pressure sensitive adhesive layer to the first part; and
c) adhering the second part to the second pressure sensitive adhesive layer;
wherein the first pressure sensitive adhesive layer and the second pressure sensitive adhesive layer both have a composition selected from either:
A) composition (1) comprising:
   a) 60 parts by weight or greater of a low Tg (meth)acrylate copolymer (component) comprising:
      i. C₁-C₃₂ (meth)acrylic acid ester monomer units;
      ii. optionally, acid functional ethylenically unsaturated monomer units;
      iii. optionally, non-acid functional, ethylenically unsaturated polar monomer units;
      iv. optionally, vinyl monomer units; and
      v. optionally, multifunctional (meth)acrylate monomer units, and
   b) up to 40 parts by weight of a high Tg (meth)acrylate copolymer having a weight average molecular weight (Mw) of above 20,000 Daltons, and comprising:
      i. high Tg (meth)acrylic acid ester monomer units;
      ii. optionally, acid functional ethylenically unsaturated monomer units;
      iii. optionally, low Tg (meth)acrylic acid ester monomer units;
      iv. optionally, non-acid functional, ethylenically unsaturated polar monomer units;
      v. optionally, vinyl monomer units;
      vi. optionally, a chlorinated polyolefinic (co)polymer; and
   c) optionally, up to 20 parts by weight of a hydrogenated hydrocarbon tackifier, based on 100 parts by weight of copolymers a) and b);
   or;
B) composition (2) comprising:
   a) a linear block copolymer of the formula R - (G)m, wherein m is 1 or 2;
   b) a multi-arm block copolymer of the formula Qn-Y, wherein:
      i. Q represents an arm of the multi-arm block copolymer and each arm independently has the formula G-R,
      ii. n represents the number of arms and is a whole number of at least 3; and
      iii. Y is the residue of a multifunctional coupling agent; wherein each R is a rubbery block comprising a polymerized conjugated diene, a hydrogenated derivative of a polymerized conjugated diene, or combinations thereof; and each G is a glassy block comprising a polymerized monovinyl aromatic monomer;
   c) a first high Tg tackifier having a Tg of at least 60 degrees C, wherein the first high Tg tackifier is primarily compatible with the rubbery blocks;
   d) a second high Tg tackifier having a Tg of at least 60 degrees C, wherein the second high Tg tackifier is primarily compatible with the glassy blocks; and
   e) at least one component selected from the group consisting of a low Tg tackifier, a plasticizer, and combinations thereof.

In the context of the present disclosure, it has surprisingly been found that a multilayer pressure sensitive adhesive foam tape as described above, in particular wherein the first pressure sensitive adhesive layer and the second pressure sensitive adhesive layer both have a composition selected from either composition 1 or composition 2, provides excellent adhesion and outstanding cohesion properties to difficult-to-bond substrates, even under high stress conditions such as e.g. exposure to intense weathering conditions or under intensive usage. Challenging or difficult-to-bond substrates include, in particular, substrates having respectively a low and a medium surface energy.

In the context of the present disclosure, the expression "low surface energy substrates" is meant to refer to those substrates having a surface energy of less than 34 dynes per centimeter. Included among such materials are polypropylene, polyethylene, and blends of polypropylene such as e.g. PP/EPDM, TPO.

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, PC, PVC, PA, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

The surface energy is typically determined from contact angle measurements as described, for example, in ASTM D7490-08.

The multilayer pressure sensitive adhesive foam tape for use in the present disclosure are outstandingly suitable for outdoor applications, in particular for adhering a first part to a second part, wherein the first part and the second part are used for exterior applications and comprise a thermoplastic or a thermosetting organic polymer (sometimes referred to as exterior plastic parts). As such, the pressure sensitive adhesive compositions of the present disclosure are particularly suited for outdoor applications in transportation market applications, in particular automotive and aerospace applications, and in construction market applications.

In the context of the present disclosure, it has been surprisingly found that multilayer pressure sensitive adhesive foam tape for use herein provides efficient bonding performance and resistance against high mechanical and/or chemical stress conditions such as exposure to intense wind or rain, which may typically occur in transportation and construction market applications. The multilayer pressure sensitive adhesive foam tape for use herein are particularly suited for automotive applications, in particular for bonding exterior car parts, which are typically subjected to high stress due in particular to exposure to intense headwind and/or tailwind (especially at high speed), in particular frontal headwind. Conventional exterior car parts are typically made of thermoplastic or thermosetting organic polymers, and may be subjected to premature debonding when exposed to high mechanical stress, in particular upon exposure to intense headwind and/or tailwind, in particular frontal headwind.

Without wishing to be bound by theory, it is believed that this outstanding suitability is due to the specific multilayer pressure sensitive adhesive foam tape as described above, in particular the specific combination of the polymeric foam layer and the two pressure sensitive adhesive layers having the required compositions as described above.

In the context of the present disclosure, the term superimposed means that two or more of the layers of the multilayer pressure sensitive adhesive foam tape, are arranged on top of each other. Superimposed layers may be arranged directly next to each other so that the upper surface of the lower layer is abutting the lower surface of the upper layer. In another arrangement, superimposed layers are not abutting each other but are separated from each other by one or more layers and/or one or more solid films or webs.

The term adjacent, as used as used throughout the description, refers to two superimposed layers within the multilayer pressure sensitive adhesive foam tape which are arranged directly next to each other, i.e. which are abutting each other.

Composition 1 for use herein comprises a low Tg (meth)acrylate copolymer and a high Tg (meth)acrylate copolymer.

The low Tg (meth)acrylate copolymer (component), which may be a solution copolymer or a syrup copolymer, comprises:
i. C₁-C₃₂ (meth)acrylic acid ester monomer units, C₁-C₂₄ (meth)acrylic acid ester monomer units, or even C₁-C₁₈ (meth)acrylic acid ester monomer units;
ii. optionally, acid-functional ethylenically unsaturated monomer units;
iii. optionally, non-acid functional, ethylenically unsaturated polar monomer units;
iv. optionally, vinyl monomer units; and
v. optionally, multifunctional (meth)acrylate monomer units.

In the context of the present disclosure, the expression "low Tg (meth)acrylate copolymer" is meant to designate a (meth)acrylate copolymer having a Tg of below 20°C.

The high Tg acrylate copolymer has a weight average molecular weight (Mw) of above 20,000 Daltons, and comprises:
i. high Tg (meth)acrylic acid ester monomer units;
ii. optionally, acid functional ethylenically unsaturated monomer units;
iii. optionally, low Tg (meth)acrylic acid ester monomer units;
iv. optionally, non-acid functional, ethylenically unsaturated polar monomer units;
v. optionally, vinyl monomer units.

In the context of the present disclosure, the expression "high Tg (meth)acrylate copolymer" is meant to designate a (meth)acrylate copolymer having a Tg of above 50°C.

In the context of the present disclosure, the expression "low Tg (meth)acrylic acid ester monomer units" is meant to designate (meth)acrylic acid ester monomer units having a Tg of below 20°C, as a function of the homopolymer of said low Tg monomers.

In the context of the present disclosure, the expression "high Tg (meth)acrylic acid ester monomer units" is meant to designate (meth)acrylic acid ester monomer units having a Tg of above 50°C, as a function of the homopolymer of said high Tg monomers.

The terms "glass transition temperature" and "Tg" are used interchangeably and refer to the glass transition temperature of a material or a mixture. Unless otherwise indicated, glass transition temperature values are estimated by the Fox equation, as detailed hereinafter.

As used herein, the term "alkyl" refers to a mono- or polyvalent group which is a saturated hydrocarbon. The alkyl can be linear, branched, cyclic, or combinations thereof and includes both unsubstituted and substituted alkyl groups. The alkyl group typically has 1 to 32 carbon atoms. In some embodiments, the alkyl group contains 1 to 25, 1 to 20, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl, cyclopentyl, cyclohexyl, cycloheptyl, adamantyl, norbornyl and 2-propylheptyl.

In a particular aspect, the low Tg (meth)acrylate copolymer for use herein, and which may be a solution copolymer or a syrup copolymer, has a Tg of below 20°C, or even below 0°C.

According to a particular aspect, the low Tg (meth)acrylate copolymer for use herein comprises C₁-C₂₄ (meth)acrylic acid ester monomer units, C₁-C₁₈ (meth)acrylic acid ester monomer units, or even C₄-C₁₂ (meth)acrylic acid ester monomer units.

According to a more particular aspect, the low Tg (meth)acrylate copolymer for use herein comprises monomeric (meth)acrylic acid esters of a non-tertiary alcohol, which alcohol contains from 1 to 32, from 1 to 24, from 1 to 18, or even from 4 to 12 carbon atoms. A mixture of such monomers may be used.

Examples of monomers suitable for use as the (meth)acrylate acid ester monomer units include, but are not limited to, the esters of either acrylic acid or methacrylic acid with non-tertiary alcohols selected from the group consisting of ethanol, 1-propanol, 2-propanol, 1-butanol, 2-butanol, 1-pentanol, 2-pentanol, 3-pentanol, 2-methyl-1-butanol, 3-methyl-1-butanol, 1-hexanol, 2-hexanol, 2-methyl-1-pentanol, 3-methyl-1-pentanol, 2-ethyl-1-butanol, 3,5,5-trimethyl-1-hexanol, 3-heptanol, 1-octanol, 2-octanol, isooctylalcohol, 2-ethyl-1-hexanol, 1-decanol, 2-propylheptanol, 1-dodecanol, 1-tridecanol, 1-tetradecanol, citronellol, dihydrocitronellol, and any combinations of mixtures thereof.

In some particular aspects, the (meth)acrylate ester monomer unit is the ester of (meth)acrylic acid with butyl alcohol or isooctyl alcohol, or a combination thereof, although combinations of two or more different (meth)acrylate ester monomer are also suitable.

According to another aspect, the (meth)acrylate acid ester monomer units are the esters of (meth)acrylic acid with alcohols derived from a renewable source, such as 2-octanol, citronellol, dihydrocitronellol, and any combinations or mixtures thereof.

In some other aspects, the (meth)acrylate acid ester monomer units are esters of (meth)acrylic acid with 2-alkyl alkanols (Guerbet alcohols) as described in WO-A1-2011119363 (Lewandowski et al.), the content of which is incorporated herein by reference.

In some other aspects, the (meth)acrylate acid ester monomer units are esters of (meth)acrylic acid with non-tertiary alcohols selected from the group consisting of 2-ethyl-1-hexanol and 2-propylheptanol. In a particular aspect, the (meth)acrylate acid ester monomer units are esters of (meth)acrylic acid with 2-propylheptanol.

In some aspects, the (meth)acrylate acid ester monomer units for use herein is present in an amount of 85 to 99.5 parts by weight based on 100 parts total monomer content used to prepare the low Tg copolymer. Preferably, the (meth)acrylate acid ester monomer unit is present in an amount of 95 to 99 parts by weight based on 100 parts total monomer content of the low Tg copolymer.

The low Tg (meth)acrylate copolymer for use herein may optionally further comprise acid functional ethylenically unsaturated monomer units, where the acid functional group may be an acid *per se,* such as a carboxylic acid, or a portion may be salt thereof, such as an alkali metal carboxylate. Useful acid functional ethylenically unsaturated monomer units include, but are not limited to, those selected from ethylenically unsaturated carboxylic acids, ethylenically unsaturated sulfonic acids, ethylenically unsaturated phosphonic acids, and mixtures thereof. Examples of such compounds include those selected from acrylic acid, methacrylic acid, itaconic acid, fumaric acid, crotonic acid, citraconic acid, maleic acid, oleic acid, β-carboxyethyl (meth)acrylate, 2-sulfoethyl methacrylate, styrene sulfonic acid, 2-acrylamido-2-methylpropanesulfonic acid, vinylphosphonic acid, and any combinations or mixtures thereof.

Due to their availability, acid functional ethylenically unsaturated monomer units of the acid functional low Tg (meth)acrylate copolymer are generally selected from ethylenically unsaturated carboxylic acids, i.e. (meth)acrylic acids. When even stronger acids are desired, acidic monomers include the ethylenically unsaturated sulfonic acids and ethylenically unsaturated phosphonic acids. The acid functional ethylenically unsaturated monomer unit is generally used in amounts of 0.5 to 15 parts by weight, 1 to 15 parts by weight, or even 1 to 5 parts by weight, based on 100 parts by weight total monomer of the low Tg (meth)acrylate copolymer. In some other aspects, the acid functional ethylenically unsaturated monomer unit is used in amounts of 0.5 to 15 parts by weight, 0.5 to 10 parts by weight, 0.5 to 5 parts by weight, 0.5 to 3 parts by weight, or even 0.5 to 2 parts by weight, based on 100 parts by weight total monomer of the low Tg (meth)acrylate copolymer.

The non-acid functional, ethylenically unsaturated polar monomer units useful in preparing the low Tg (meth)acrylate copolymer are both somewhat oil soluble and water soluble, resulting in a distribution of the polar monomer between the aqueous and oil phases in an emulsion polymerization. As used herein, the term "polar monomers" are exclusive of acid functional monomers.

Representative examples of suitable non-acid functional, ethylenically unsaturated polar monomer units include, but are not limited to, 2-hydroxyethyl (meth)acrylate; N-vinylpyrrolidone; N-vinylcaprolactam; acrylamide; mono- or di-N-alkyl substituted acrylamide; t-butyl acrylamide; dimethylaminoethyl acrylamide; N-octyl acrylamide; poly(alkoxyalkyl) (meth)acrylates including 2-(2-ethoxyethoxy)ethyl (meth)acrylate, 2-ethoxyethyl (meth)acrylate, 2-methoxyethoxyethyl (meth)acrylate, 2-methoxyethyl methacrylate, polyethylene glycol mono(meth)acrylates; alkyl vinyl ethers, including vinyl methyl ether; and mixtures thereof. Preferred non-acid functional, ethylenically unsaturated polar monomer units include those selected from the group consisting of 2-hydroxyethyl (meth)acrylate and N-vinylpyrrolidinone. The non-acid functional, ethylenically unsaturated polar monomer unit may be present in amounts of 0 to 10 parts by weight, or even 0.5 to 5 parts by weight, based on 100 parts by weight total monomer of the low Tg (meth)acrylate copolymer.

When used, vinyl monomer units useful in preparing the low Tg (meth)acrylate copolymer, include vinyl esters (e.g., vinyl acetate and vinyl propionate), styrene, substituted styrene (e.g., α-methyl styrene), vinyl halide, and mixtures thereof. As used herein vinyl monomer units are exclusive of acid functional monomers, acrylate ester monomers and polar monomers. Such vinyl monomer units are generally used at 0 to 5 parts by weight, or even 1 to 5 parts by weight, based on 100 parts by weight total monomer of the low Tg (meth)acrylate copolymer.

In order to increase cohesive strength of the coated adhesive composition, a multifunctional (meth)acrylate monomer unit may be incorporated into the blend of polymerizable monomers. Multifunctional acrylate monomer units are particularly useful for emulsion or syrup polymerization. Examples of useful multifunctional (meth)acrylate monomer units include, but are not limited to, di(meth)acrylates, tri(meth)acrylates, and tetra(meth)acrylates, such as 1,6-hexanediol di(meth)acrylate, poly(ethylene glycol) di(meth)acrylates, polybutadiene di(meth)acrylate, polyurethane di(meth)acrylates, and propoxylated glycerin tri(meth)acrylate, and mixtures thereof. The amount and identity of the particular multifunctional (meth)acrylate monomer unit is tailored depending upon application of the adhesive composition.

Typically, the multifunctional (meth)acrylate monomer unit is present in amounts less than 5 parts based on total dry weight of adhesive composition. More specifically, the multifunctional (meth)acrylate monomer unit (crosslinker) may be present in amounts from 0.01 to 5 parts, or even 0.05 to 1 parts, based on 100 parts total monomers of the low Tg (meth)acrylate copolymer.

According to such particular aspect, the low Tg (meth)acrylate copolymer may comprise:
i. 85 to 99.5 parts by weight of an (meth)acrylic acid ester monomer unit of non-tertiary alcohol;
ii. 0.5 to 15 parts by weight of an acid functional ethylenically unsaturated monomer unit;
iii. 0 to 10 parts by weight of a non-acid functional, ethylenically unsaturated polar monomer unit;
iv. 0 to 5 parts vinyl monomer units; and
v. 0 to 5 parts of a multifunctional (meth)acrylate monomer units;
based on 100 parts by weight total monomers of the low Tg (meth)acrylate copolymer.

In some aspects, the low Tg copolymers may contain high Tg (meth)acrylic acid ester monomer units having glass transition temperatures of above 50°C, as a function of the homopolymer of said high Tg (meth)acrylic acid ester monomer units. The incorporation of small amounts of high Tg (meth)acrylic acid ester monomer units in the low Tg (meth)acrylate copolymer component improves the compatibility and stabilize the microphase morphology between the low-and high Tg (meth)acrylate copolymer components, particularly when the high Tg (meth)acrylic acid ester monomer unit is common to both (meth)acrylate copolymer components.

Suitable high Tg monomer units are (meth)acrylate acid esters and are described in more detail below. The low Tg (meth)acrylate copolymer may contain amounts of copolymerized high Tg (meth)acrylic acid ester monomer units such that the Tg of the (meth)acrylate copolymer is of below 20°C, preferably below 0°C, as estimated by the Fox Equation. Generally, the copolymer may contain 1-20 wt.%, or 1-10 wt.% in the low Tg (meth)acrylate copolymer. The high Tg (meth)acrylic acid ester monomer units of the low Tg (meth)acrylate copolymer may be incorporated in any manner. They may be part of the monomer mixture used in the preparation, whether by syrup, solvent or neat polymerization.

Where such high Tg (meth)acrylic acid ester monomer units are included, the low Tg (meth)acrylate copolymer may comprise:
i. 60 to 98.5 parts by weight, preferably 65 to 98.5 parts by weight of an (meth)acrylic acid ester of non-tertiary alcohol;
ii. 1 to 20 parts by weight of high Tg (meth)acrylic acid ester monomer units;
iii. 0.5 to 15 parts by weight of acid-functional ethylenically unsaturated monomer units;
iv. 0 to 10 parts by weight of non-acid functional, ethylenically unsaturated polar monomer units;
v. 0 to 5 parts vinyl monomer units; and
vi. 0 to 5 parts of multifunctional (meth)acrylate monomer units;
based on 100 parts by weight total monomers of the low Tg (meth)acrylate copolymer.

The low Tg (meth)acrylate copolymer may be prepared by any conventional free radical polymerization method, including solution, radiation, bulk, dispersion, emulsion, solventless, and suspension processes. The resulting adhesive (co)polymers may be random or block (co)polymers. Preferably, the low Tg (meth)acrylate copolymer component is generally prepared as either a solution or syrup copolymer composition.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of about 40 to 100°C until the reaction is completed, typically in about 1 to 24 hours, depending upon the batch size and temperature. Examples of the solvent are methanol, tetrahydrofuran, ethanol, isopropanol, acetone, methyl ethyl ketone, methyl acetate, ethyl acetate, toluene, xylene, and an ethylene glycol alkyl ether. Those solvents can be used alone or as mixtures thereof.

A syrup polymer technique comprises partially polymerizing monomers to produce a syrup polymer comprising the low Tg (meth)acrylate copolymer and unpolymerized monomers. The syrup polymer composition is polymerized to a useful coating viscosity, which may be coated onto a substrate (such as a tape backing) and further polymerized. Partial polymerization provides a coatable solution of the acid functional (meth)acrylate solute copolymer in one or more solvent monomers. When high Tg (meth)acrylic acid ester monomer units are included, the initial monomer mixture may include the high Tg (meth)acrylic acid ester monomer units, and/or the high Tg (meth)acrylic acid ester monomer units may be added to the syrup polymer composition. In such aspects, the monomer mixture may be combined and partially polymerized to a suitable viscosity, then addition high Tg (meth)acrylic acid ester monomer units added.

The polymerizations may be conducted in the presence of, or preferably in the absence of, suitable solvents such as ethyl acetate, toluene and tetrahydrofuran which are unreactive with the functional groups of the components of the syrup polymer.

Polymerization can be accomplished by exposing the syrup polymer composition to energy in the presence of a photoinitiator. Energy activated initiators may be unnecessary where, for example, ionizing radiation is used to initiate polymerization. These photoinitiators can be employed in concentrations ranging from about 0.0001 to about 3. 0 pbw, preferably from about 0.0001 to about 1.0 pbw, and more preferably from about 0.005 to about 0.5 pbw, per 100 pbw of the total monomer of the low Tg (meth)acrylate syrup copolymer.

A preferred method of preparation of the coatable syrup polymer is photoinitiated free radical polymerization. Advantages of the photopolymerization method are that 1) heating the monomer solution is unnecessary and 2) photoinitiation is stopped completely when the activating light source is turned off. Polymerization to achieve a coatable viscosity may be conducted such that the conversion of monomers to polymer is up to about 30%. Polymerization can be terminated when the desired conversion and viscosity have been achieved by removing the light source and by bubbling air (oxygen) into the solution to quench propagating free radicals.

The solute (co)polymer(s) may be prepared conventionally in a non-monomeric solvent and advanced to high conversion (degree of polymerization). When solvent (monomeric or non-monomeric) is used, the solvent may be removed (for example by vacuum distillation) either before or after formation of the syrup polymer. While an acceptable method, this procedure involving a highly converted functional polymer is not preferred because an additional solvent removal step is required, another material may be required (the non-monomeric solvent), and dissolution of the high molecular weight, highly converted solute polymer in the monomer mixture may require a significant period of time.

Useful photoinitiators include benzoin ethers such as benzoin methyl ether and benzoin isopropyl ether; substituted acetophenones such as 2, 2-dimethoxyacetophenone, available as Irgacure™ 651 photoinitiator (BASF, Ludwigshafen, Germany), 2,2 dimethoxy-2-phenyl-1-phenylethanone, available as Esacure™ KB-1 photoinitiator (Sartomer Co.; West Chester, PA), and dimethoxyhydroxyacetophenone; substituted α-ketols such as 2- methyl-2-hydroxy propiophenone; aromatic sulfonyl chlorides such as 2-naphthalene-sulfonyl chloride; and photoactive oximes such as 1-phenyl-1,2-propanedione-2-(O-ethoxy-carbonyl)oxime. Particularly preferred among these are the substituted acetophenones.

Preferred photoinitiators are photoactive compounds that undergo a Norrish I cleavage to generate free radicals that can initiate by addition to the acrylic double bonds. Additional photoinitiator can be added to the mixture to be coated after the copolymer has been formed, i.e., photoinitiator can be added to the syrup polymer mixture.

The syrup polymer composition and the photoinitiator may be irradiated with activating UV radiation to polymerize the monomer component(s). UV light sources can be of two types: 1) relatively low light intensity sources such as backlights which provide generally 10 mW/cm² or less (as measured in accordance with procedures approved by the United States National Institute of Standards and Technology as, for example, with a Uvimap^{tm} UM 365 L-S radiometer manufactured by Electronic Instrumentation & Technology, Inc., in Sterling, VA) over a wavelength range of 280 to 400 nanometers and 2) relatively high light intensity sources such as medium pressure mercury lamps which provide intensities generally greater than 10 mW/cm², preferably between 15 and 450 mW/cm². For example, an intensity of 600 mW/cm² and an exposure time of about 1 second may be used successfully. Intensities can range from about 0.1 to about 150 mW/cm², preferably from about 0. 5 to about 100 mW/cm², and more preferably from about 0. 5 to about 50 mW/cm². Such photoinitiators preferably are present in an amount of from 0.1 to 1.0 pbw per 100 pbw of the syrup polymer composition.

The degree of conversion (of monomers to copolymer) can be monitored during the irradiation by measuring the index of refraction of the polymerizing. Useful coating viscosities are achieved with conversions (i.e. the percentage of available monomer polymerized) in the range of up to 30%, preferably 2-20%, more preferably from 5-15%, and most preferably from 7-12%. The molecular weight (weight average) of the solute polymer(s) is at least 100,000, preferably at least 250,000, more preferably at least 500,000.

It will be understood that a syrup polymerization method will produce a "dead polymer" in the initial free radical polymerization; i.e. a fully polymerized, not free-radically polymerizable polymer. Subsequently the solvent monomers do not free-radically polymerize onto the extant solute copolymer. Upon compounding the syrup polymer, further exposure to UV initiates free radical polymerization of the solvent monomers to produce a distinct copolymer. The syrup method provides advantages over solvent or solution polymerization methods; the syrup method yielding higher molecular weights. These higher molecular weights increase the amount of chain entanglements, thus increasing cohesive strength. Also, the distance between cross-links can be greater with high molecular syrup polymer, which allows for increased wet-out onto a surface.

Composition 1 for use herein further comprises, in part, a high Tg (meth)acrylate copolymer having a weight average molecular weight (Mw) of above 20,000 Daltons, above 25,000 Daltons, above 30,000 Daltons, above 35,000 Daltons, or even above 40,000 Daltons.

In some aspects, the high Tg (meth)acrylate copolymer has a weight average molecular weight (Mw) of below 100,000 Daltons, below 80,000 Daltons, below 75,000 Daltons, below 60,000 Daltons, below 50,000 Daltons, or even below 45,000 Daltons.

The high Tg (meth)acrylate copolymer has a Tg of above 50°C, or even above 75°C.

The high Tg (meth)acrylate copolymer comprises:
i) high Tg (meth)acrylic acid ester monomer units;
ii) optionally, acid functional ethylenically unsaturated monomer units;
iii) optionally, low Tg (meth)acrylic acid ester monomer units;
iv) optionally, non-acid functional, ethylenically unsaturated polar monomer units; and
v) optionally, vinyl monomer units.

The high Tg (meth)acrylate copolymer may comprise 100 wt.% high Tg monomer(s). In other aspects, the high Tg (meth)acrylate copolymer may comprise the additional monomer units, as described for the low Tg (meth)acrylate copolymer (supra), each in amounts such that the Tg of the resulting copolymer is at least 50°C, or even at least 75°C, as estimated by the Fox equation.

Thus the high Tg (meth)acrylate copolymer may comprise:
i) up to 100 parts by weight of high Tg (meth)acrylic acid ester monomer units;
ii) 0 to 15, or even 1 to 5 parts by weight of acid functional ethylenically unsaturated monomer units;
iii) 0 to 50, or even 1 to 25 parts by weight of optional low Tg (meth)acrylic acid ester monomer units;
iv) 0 to 10, or even 1 to 5 parts by weight of optional non-acid functional, ethylenically unsaturated polar monomer units; and
v) 0 to 5, or even 1 to 5 parts by weight of optional vinyl monomer units.

It is desirable for the (meth)acrylic acid ester (co)polymer to include a high Tg monomer units, such that the high Tg (meth)acrylate copolymer has a Tg of above 50°C, or even above 75°C, as estimated by the Fox Equation.

Suitable high Tg (meth)acrylic acid ester monomer units are selected from the group consisting of t-butyl (meth)acrylate, methyl (meth)acrylate, ethyl (meth)acrylate, isopropyl (meth)acrylate, n-butyl (meth)acrylate, isobutyl (meth)acrylate, s-butyl (meth)acrylate, t-butyl (meth)acrylate, stearyl (meth)acrylate, phenyl (meth)acrylate, cyclohexyl (meth)acrylate, isobornyl (meth)acrylate, isobornyl (meth)acrylate, benzyl (meth)acrylate, 3,3,5 trimethylcyclohexyl (meth)acrylate, cyclohexyl (meth)acrylate, N-octyl acrylamide, propyl (meth)acrylate, and any combinations or mixtures thereof.

Suitable low Tg (meth)acrylic acid ester monomer units include those having one ethylenically unsaturated group and a glass transition temperature of less than 0°C (as a function of the homopolymer). Exemplary low Tg (meth)acrylic acid ester monomer units for use herein include, but are not limited to, n-butyl acrylate, isobutyl acrylate, hexyl acrylate, 2-ethyl-hexylacrylate, isooctylacrylate, caprolactoneacrylate, isodecylacrylate, tridecylacrylate, laurylmethacrylate, methoxy-polyethylenglycol-monomethacrylate, laurylacrylate, tetrahydrofurfuryl-acrylate, ethoxy-ethoxyethyl acrylate and ethoxylated-nonylacrylate. Especially preferred are 2-ethyl-hexylacrylate, ethoxy-ethoxyethyl acrylate, tridecylacrylate and ethoxylated nonylacrylate. Other monomers may be used as described for the low Tg copolymer (*supra*).

The high Tg (meth)acrylate (co)polymer herein may be prepared by any conventional free radical polymerization method, including solution, radiation, bulk, dispersion, emulsion, and suspension processes. The resulting adhesive (co)polymers may be random or block (co)polymers.

The adhesive copolymers may be prepared via suspension polymerizations as disclosed in U.S. 3,691,140 (Silver); 4,166,152 (Baker et al.); 4,636,432 (Shibano et al); 4,656,218 (Kinoshita); and 5,045,569 (Delgado).

Polymerization via emulsion techniques may require the presence of an emulsifier (which may also be called an emulsifying agent or a surfactant). Useful emulsifiers for the present disclosure include those selected from the group consisting of anionic surfactants, cationic surfactants, nonionic surfactants, and mixtures thereof. Preferably, an emulsion polymerization is carried out in the presence of anionic surfactant(s). A useful range of surfactant concentration is from about 0.5 to about 8 weight percent, preferably from about 1 to about 5 weight percent, based on the total weight of all monomers of the emulsion pressure-sensitive adhesive.

Alternatively, the copolymers can be polymerized by techniques including, but not limited to, the conventional techniques of solvent polymerization, dispersion polymerization, and solventless bulk polymerization. The monomer mixture may comprise a polymerization initiator, especially a thermal initiator or a photoinitiator of a type and in an amount effective to polymerize the comonomers.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of about 40 to 100°C until the reaction is completed, typically in about 1 to 20 hours, depending upon the batch size and temperature. Examples of the solvent are methanol, tetrahydrofuran, ethanol, isopropanol, acetone, methyl ethyl ketone, methyl acetate, ethyl acetate, toluene, xylene, and an ethylene glycol alkyl ether. Those solvents can be used alone or as mixtures thereof.

In a typical photopolymerization method, a monomer mixture may be irradiated with ultraviolet (UV) rays in the presence of a photopolymerization initiator (i.e., photoinitiators). Preferred photoinitiators are those available under the trade designations IRGACURE™ and DAROCUR™ from BASF and include 1-hydroxy cyclohexyl phenyl ketone (IRGACURE™ 184), 2,2-dimethoxy-1,2-diphenylethan-1-one (IRGACURE 651), *bis*(2,4,6-trimethylbenzoyl)phenylphosphineoxide (IRGACURE™ 819), 1-[4-(2-hydroxyethoxy)phenyl]-2-hydroxy-2-methyl-1-propane-1-one (IRGACURE™ 2959), 2-benzyl-2-dimethylamino-1-(4-morpholinophenyl)butanone (IRGACURE™ 369), 2-methyl-1-[4-(methylthio)phenyl]-2-morpholinopropan-1-one (IRGACURE™ 907), and 2-hydroxy-2-methyl-1-phenyl propan-1-one (DAROCUR™ 1173). Particularly preferred photoinitiators are IRGACURE™ 819, 651, 184 and 2959.

Solventless polymerization methods, such as the continuous free radical polymerization method described in U.S. Pat. Nos. 4,619,979 and 4,843,134(Kotnour et al.); the essentially adiabatic polymerization methods using a batch reactor described in U.S. Pat. No. 5,637,646 (Ellis); and, the methods described for polymerizing packaged pre-adhesive compositions described in U.S. Pat. No. 5,804,610 (Hamer et al.) may also be utilized to prepare the polymers.

Water-soluble and oil-soluble initiators useful in preparing the high Tg (co)polymers used in the present disclosure are initiators that, on exposure to heat, generate free-radicals which initiate (co)polymerization of the monomer mixture. Water-soluble initiators are preferred for preparing the (meth)acrylate polymers by emulsion polymerization. Suitable water-soluble initiators include but are not limited to those selected from the group consisting of potassium persulfate, ammonium persulfate, sodium persulfate, and mixtures thereof; oxidation-reduction initiators such as the reaction product of the above-mentioned persulfates and reducing agents such as those selected from the group consisting of sodium metabisulfite and sodium bisulfite; and 4,4'-azobis(4-cyanopentanoic acid) and its soluble salts (e.g., sodium, potassium). The preferred water-soluble initiator is potassium persulfate. Suitable oil-soluble initiators include but are not limited to those selected from the group consisting of azo compounds such as VAZO™ 64 (2,2'-azobis(isobutyronitrile)) and VAZO™ 52 (2,2'-azobis(2,4-dimethylpentanenitrile)), both available from E.I. du Pont de Nemours Co., peroxides such as benzoyl peroxide and lauroyl peroxide, and mixtures thereof. The preferred oil-soluble thermal initiator is (2,2'-azobis(isobutyronitrile)). When used, initiators may comprise from about 0.05 to about 1 part by weight, or from about 0.1 to about 0.5 part by weight based on 100 parts by weight of monomer components in the first pressure-sensitive adhesive.

For both of the high and low Tg (meth)acrylate copolymers, a useful predictor of interpolymer Tg for specific combinations of various monomers can be computed by application of Fox Equation : 1/Tg = ∑Wi/Tgi. In this equation, Tg is the glass transition temperature of the mixture, Wi is the weight fraction of component i in the mixture, and Tgi is the glass transition temperature of component i, and all glass transition temperatures are in Kelvin (K). As used herein the term "high Tg monomer" refers to a monomer, which when homopolymerized, produce a (meth)acryloyl polymer having a Tg of above 50°C. The incorporation of the high Tg monomer to the high Tg (meth)acrylate copolymer is sufficient to raise the glass transition temperature of the resulting (meth)acrylate copolymer to above 50°C, above 75°C, or even above 100°C, as calculated using the Fox Equation. Alternatively, the glass transition temperature can alos be measured in a variety of known ways, including, e.g., through differential scanning calorimetry (DSC).

If desired, a chain transfer agent may be added to the monomer mixture of either of the low- or high Tg (co)polymers to produce a (co)polymer having the desired molecular weight. A chain transfer is preferably used in the preparation of the high Tg (co)polymer. It has been observed that when the molecular weight of the high Tg (co)polymer is less than 20k, the peel performance at elevated temperatures is reduced. Further, when the M_{w} is greater than about 100k, the immiscibility of the components is such that the tack of the composition is reduced.

Examples of useful chain transfer agents include but are not limited to those selected from the group consisting of carbon tetrabromide, alcohols, mercaptans, and mixtures thereof. When present, the preferred chain transfer agents are isooctylthioglycolate and carbon tetrabromide. The chain transfer agent may be used in amounts such that the high Tg (co)polymer has a M_{w} of greater than 20k, and preferable less than 100 k. The monomer mixture may further comprise up to about 5 parts by weight of a chain transfer agent, typically about 0.01 to about 5 parts by weight, if used, preferably about 0.5 parts by weight to about 3 parts by weight, based upon 100 parts by weight of the total monomer mixture.

In order to increase cohesive strength of composition 1, a crosslinking additive may be added to the adhesive composition - the combination of the high- and low Tg (co)polymers. Two main types of crosslinking additives are exemplary. The first crosslinking additive is a thermal crosslinking additive such as multifunctional aziridine, isocyanate and epoxy. One example of aziridine crosslinker is 1,1' -isophthaloyl-bis(2-methylaziridine (CAS No. 7652-64-4). Such chemical crosslinkers can be added into PSAs after polymerization and activated by heat during oven drying of the coated adhesive. Although polyfunctional (meth)acrylates may be included in the low Tg copolymer component and may function as crosslinking agents, additional crosslinking agents may be added. In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE202009013255 U1, EP 2 305 389 A, EP 2 414 143 A, EP 2 192 148 A, EP 2 186 869, EP 0 752 435 A, EP 1 802 722 A, EP 1 791 921 A, EP 1 791 922 A, EP 1978 069 A, and DE 10 2008 059 050 A, the relevant contents of which are herewith incorporated by reference. Suitable accelerant and retardant systems for use herein are described e.g. in the description of US-A1-2011/0281964, the relevant content of which is herewith explicitly incorporated by reference. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500.

In another embodiment, chemical crosslinkers, which rely upon free radicals to carry out the crosslinking reaction, may be employed. Reagents such as, for example, peroxides serve as a source of free radicals. When heated sufficiently, these precursors will generate free radicals that bring about a crosslinking reaction of the polymer. A common free radical generating reagent is benzoyl peroxide. Free radical generators are required only in small quantities, but generally require higher temperatures to complete a crosslinking reaction than those required for the bisamide and isocyanate reagents.

The second type of crosslinking additive is a photosensitive crosslinker, which is activated by high intensity ultraviolet (UV) light. Two common photosensitive crosslinkers used for acrylic PSAs are benzophenone and copolymerizable aromatic ketone monomers as described in U.S. Patent No. 4,737,559 (Kellen et al.). Another photocrosslinker, which can be post-added to the solution or syrup copolymer and activated by UV light is a triazine, for example, 2,4-bis(trichloromethyl)-6-(4-methoxyphenyl)-s-triazine. In some embodiments, multifunctional acrylates may be used to increase the cohesive strength. Multi-functional acrylates are particularly useful for emulsion polymerization. Examples of useful multi-functional acrylate crosslinking agents include, but are not limited to, diacrylates, triacrylates, and tetraacrylates, such as 1,6-hexanediol diacrylate, poly(ethylene glycol) diacrylates, polybutadiene diacrylate, polyurethane diacrylates, and propoxylated glycerin triacrylate, and mixtures thereof.

Hydrolyzable, free-radically copolymerizable crosslinkers, such as monoethylenically unsaturated mono-, di-, and trialkoxy silane compounds including, but not limited to, methacryloxypropyltrimethoxysilane (available from Gelest, Inc., Tullytown, PA), vinyl dimethylethoxysilane, vinyl methyl diethoxysilane, vinyltriethoxysilane, vinyltrimethoxysilane, vinyltriphenoxysilane, and the like, are also useful crosslinking agents.

The amount and identity of the crosslinking agent is tailored depending upon application of the adhesive composition. If present, a crosslinker can be used in any suitable amount. Typically, the crosslinking agent is present in amounts less than 5 parts based on total dry weight of adhesive composition. More specifically, the crosslinker may be present in amounts from 0.01 to 5 parts, preferably 0.05 to 1 parts, based on 100 parts total monomers of the low Tg copolymer.

In the context of the present disclosure, composition 1 comprises a crosslinking agent which is preferably selected from the group consisting of multifunctional aziridines, multifunctional isocyanates, multifunctional epoxides, benzophenone, triazines, multifunctional acrylates, multifunctional carboxylates, oxetanes, oxazolines, and any combinations or mixtures thereof. In a more preferred aspect, the crosslinking agent is selected from the group consisting of multifunctional acrylates.

In order to improve the adhesion of acrylic adhesives, i.e., develop more aggressive tack, to these types of surfaces; tackifying the base acrylic polymer is typically practiced. Various types of tackifiers include phenol modified terpenes, resins such as polyvinyl cyclohexane and poly(t-butyl styrene), and rosin esters such as glycerol esters of rosin and pentaerythritol esters of rosin.

Due to the high solubility parameter of most conventional pressure-sensitive acrylic adhesives and the presence of specific potential interactions between these adhesives and many tackifiers, a limited selection of tackifiers is available to the formulator. As a consequence, hydrocarbon-based tackifiers, and especially hydrogenated hydrocarbon resins, have been considered unsuitable for use in acrylic adhesives formulations due to their nonpolar character.

However, such hydrogenated hydrocarbon tackifiers may be advantageously used, as an optional ingredient, in combination with the high- and low Tg (meth)acrylate copolymers described *supra.* The tackifiers are typically used in amounts sufficient to strengthen the partial phase separation extent in the system. The incompatibility provided by such tackifiers may be used to produce pressure-sensitive adhesive compositions. As result of the incompatibility, it is observed that the glass transition of the adhesive composition is further broadened, relative to the combination of the high- and low Tg copolymers, which consequentially further improves its overall adhesions on LSE or even MSE substrates. If a compatible tackifier (those having good compatibility with the low Tg acrylic polymers) is added to a high- and low Tg copolymers blend, a significant drop in adhesion on LSE substrates is generally observed, and the advantageous effects from the phase separation of high- and low Tg copolymers may be generally lost.

Hydrogenated hydrocarbon tackifiers are traditionally used in more rubber-based adhesives rather than acrylic-based pressure sensitive adhesives. The hydrogenated hydrocarbon tackifiers are found to be particularly useful in the acrylate -based pressure sensitive adhesives for low surface energy substrates disclosed herein. Exemplary hydrogenated hydrocarbon tackifiers include C9 and C5 hydrogenated hydrocarbon tackifiers. Examples of C9 hydrogenated hydrocarbon tackifiers include those sold under the trade designation: "REGALITE S-5100", "REGALITE R-7100", "REGALITE R-9100", "REGALITE R-1125", "REGALITE S-7125", "REGALITE S-1100", "REGALITE R-1090", "REGALREZ 6108", "REGALREZ 1085", "REGALREZ 1094", "REGALREZ 1126", "REGALREZ 1139", and "REGALREZ 3103", sold by Eastman Chemical Co., Middelburg, Netherlands; "PICCOTAC" and EASTOTAC" sold by Eastman Chemical Co.; "ARKON P-140", "ARKON P-125", "ARKON P-115", "ARKON P-100", "ARKON P-90", "ARKON M-135", "ARKON M-115", "ARKON M-100", and "ARKON M-90" sold by Arakawa Chemical Inc., Chicago, IL; and "ESCOREZ 5000 series" sold by Exxon Mobil Corp., Irving, TX. Of particular interest are partially hydrogenated C9 hydrogenated tackifiers, preferably fully hydrogenated C9 hydrogenated tackifiers.

The hydrogenated hydrocarbon tackifiers, if present, are typically used in amounts of from 0.1 to 20 parts by weight, from 0.5 to 20 parts by weight, from 1 to 15 parts by weight, from 2 to 15 parts by weight, or even from 5 to 15 parts by weight, relative to 100 parts of the low- and high- Tg (meth)acrylate (co)polymers.

Other additives can be added in order to enhance the performance of composition 1. For example, leveling agents, ultraviolet light absorbers, hindered amine light stabilizers (HALS), oxygen inhibitors, wetting agents, rheology modifiers, defoamers, biocides, dyes and the like, can be included herein. All of these additives and the use thereof are well known in the art. It is understood that any of these compounds can be used so long as they do not deleteriously affect the adhesive properties.

Useful as additives to composition 1 are UV absorbers and hindered amine light stabilizers. UV absorbers and hindered amine light stabilizers act to diminish the harmful effects of UV radiation on the final cured product and thereby enhance the weatherability, or resistance to cracking, yellowing and delamination of the coating. A preferred hindered amine light stabilizer is bis(1,2,2,6,6-pentamethyl-4-piperidinyl) [3,5-bis(1,1-dimethylethyl-4-hydroxyphenyl)methyl]butylpropanedioate, available as Tinuvin™144, from BASF.

In some aspects, composition 1 may include filler. Such compositions may include at least 40 wt-%, at least 45 wt-%, or even at least 50 wt-% filler, based on the total weight of the composition. In some aspects, the total amount of filler is at most 90 wt-%, at most 80 wt-%, or even at most 75 wt-% filler.

Fillers may be selected from one or more of a wide variety of materials, as known in the art, and include organic and inorganic filler. Inorganic filler particles include silica, submicron silica, zirconia, submicron zirconia, and non-vitreous microparticles of the type described in U.S. Pat. No. 4,503,169 (Randklev).

Filler components include nanosized silica particles, nanosized metal oxide particles, and combinations thereof. Nanofillers are also described in U.S. Pat. Nos. 7,090,721 (Craig et al.), 7,090,722 (Budd et al.), 7,156,911(Kangas et al.), and 7,649,029 (Kolb et al.).

Fillers may be either particulate or fibrous in nature. Particulate fillers may generally be defined as having a length to width ratio, or aspect ratio, of 20:1 or less, and more commonly 10:1 or less. Fibers can be defined as having aspect ratios greater than 20:1, or more commonly greater than 100:1. The shape of the particles can vary, ranging from spherical to ellipsoidal, or more planar such as flakes or discs. The macroscopic properties can be highly dependent on the shape of the filler particles, in particular the uniformity of the shape.

One particularly advantageous additive that may be incorporated in composition 1 is represented by chlorinated polyolefinic (co)polymers. Incorporating chlorinated polyolefinic (co)polymers in composition 1 significantly improves the stability upon heat bond ageing and heat/humidity bond ageing of the resulting pressure sensitive adhesive polymer layer, in particular on low surface energy (LSE) substrates.

Examples of suitable chlorinated polyolefinic (co)polymers for use herein include those sold under the trade designation: "CP 343-1", sold by Eastman Chemical Co.; "13-LP", "15-LP", "16-LP" and "17-LP" sold by Toyo Kasei Kogyo Co.Ltd; "Hypalon™ CP 827B", " Hypalon™ CP 163 " and " Hypalon™ CP 183 " sold by DuPont Co.; and "Tyrin™ CPE 4211P", "Tyrin™ CPE 6323A" and "Tyrin™ CPE 3615P" sold by Dow Chemical Co. In a preferred aspect, "CP 343-1" is used as chlorinated polyolefinic (co)polymer.

According to a preferred aspect of the present disclosure, composition 1 comprises a chlorinated polyolefinic (co)polymer, which is selected from the group consisting of chlorinated polypropylene, chlorinated polyethylene, chlorinated ethylene/vinyl acetate copolymer, and any combinations, mixtures or copolymers thereof. More preferably, the chlorinated polyolefinic (co)polymer is selected from the group of chlorinated polypropylenes.

The chlorinated polyolefinic (co)polymers, if present, are typically used in amounts of from 0.1 and 15 parts by weight, from 0.1 and 10 parts by weight, from 0.2 and 5 parts by weight, from 0.2 and 3 parts by weight, or even from 0.2 and 2 parts by weight based 100 parts of the low- and high- Tg (meth)acrylate (co)polymers.

The composition 1 is generally prepared by simple blending of the high- and low Tg (meth)acrylate copolymer components, optionally with the tackifier. The polymers can be blended using several methods. The polymers can be blended by melt blending, solvent blending, or any suitable physical means. For example, the polymers can be melt blended by a method as described by Guerin et al. in U.S. Pat. No. 4,152,189, the disclosure of which is incorporated by reference herein. That is, all solvent (if used) is removed from each polymer by heating to a temperature of about 150°C to about 175°C at a reduced pressure. Although melt blending may be used, the adhesive blends of the present disclosure can also be processed using solvent blending. The acidic and basic polymers should be substantially soluble in the solvents used.

Physical blending devices that provide dispersive mixing, distributive mixing, or a combination of dispersive and distributive mixing are useful in preparing homogenous blends. Both batch and continuous methods of physical blending can be used. Examples of batch methods include BRABENDER (using a BRABENDER PREP CENTER, available from C. W. Brabender Instruments, Inc.; South Hackensack, N.J.) or BANBURY internal mixing and roll milling (using equipment available from FARREL COMPANY; Ansonia, Conn.). Examples of continuous methods include single screw extruding, twin screw extruding, disk extruding, reciprocating single screw extruding, and pin barrel single screw extruding. The continuous methods can include utilizing both distributive elements, such as cavity transfer elements (e.g., CTM, available from RAPRA Technology, Ltd.; Shrewsbury, England) and pin mixing elements, static mixing elements and dispersive elements (e.g., MADDOCK mixing elements or SAXTON mixing elements as described in "Mixing in Single-Screw Extruders," Mixing in Polymer Processing, edited by Chris Rauwendaal (Marcel Dekker Inc.: New York (1991), pp. 129, 176-177, and 185-186).

In aspects where the low Tg (meth)acrylate copolymer component is a solution copolymer, the low Tg (meth)acrylate copolymer in a solvent is combined with the high Tg (meth)acrylate (co)polymer and optionally the tackifier, mixed until homogenous, optionally coated, and dried to remove the solvent. When the low Tg (meth)acrylate polymer component is a syrup copolymer, the syrup copolymer is combined with the high Tg (meth)acrylate (co)polymer and optionally the tackifier, optional additional solvent monomer added, optionally coated and further polymerized.

The composition 1 comprises at least 60 parts by weight, preferably at least 70 parts by weight, more preferably at least 80 parts by weight, of the low Tg (meth)acrylate copolymer component, which may be in the form of a solution or a syrup copolymer; up to 40 parts by weight, preferably 5 to 40 parts by weight, of the high Tg (meth)acrylate (co)polymer, with the sum of the high- and low Tg (co)polymer components 100 parts by weight. The tackifier, if present, is used in amounts sufficient to effect a partial phase separation of the components, and is generally used in amounts of 0.1 to 15 parts, preferably 0.1 to 10 parts by weight, relative to 100 parts by weight of the high- and low Tg (meth)acrylate (co)polymer components.

It is observed that the combination of the low Tg and high Tg (meth)acrylate (co)polymer components yields a microphase-separated pressure-sensitive adhesive after curing or drying wherein the low Tg (meth)acrylate copolymer is a continuous phase and the high Tg (meth)acrylate (co)polymer exists as relatively uniformly-shaped inclusions ranging in size from about 0.01 micrometer to about 0.1 micrometer. The microphase domains are separated by a diffuse boundary caused by the intermixing of the partially incompatible components at the interfaces. It is also observed that the microphase separation broadens of the glass transition of the adhesive composition, relative to that of the composition where the high and low Tg monomer units are copolymerized in a random fashion. One estimate of this effect is the peak width at a fixed height (FHPW) at half of the peak intensity of the Tan Delta curve from a dynamic mechanical analysis.

Surprisingly, composition 1 which exhibits microphase separation, provides substantial improvement in both peel adhesion and shear-holding capability on challenging-to-bond substrates, particularly LSE and MSE substrates, more particularly, LSE substrates, when compared to compositions having a homogenous structure or those having macro-phase separation. In particular, exceptional improvements in adhesion properties at elevated temperatures are achieved. Without wishing to be bound by theory, it is believed that such advantageous phase-separating effects are dependent on the weight average molecular weight (Mw) of the high Tg (co)polymer. If the weight average molecular weight (Mw) of the high Tg (co)polymer is less than 20.000 Daltons, the phase-separating effects are not sufficient to yield satisfactory adhesion performances at elevated temperatures.

Composition 1, which exhibits microphase separation, provides substantial improvement in both peel adhesion while maintaining acceptable values for other adhesive properties such as shear, when compared to compositions having a homogenous structure or those having macro-phase separation.

The multilayer pressure sensitive adhesive foam tape for use herein comprises as a further component a polymeric foam layer.

In the context of the present disclosure, the term "polymeric foam" is meant to designate a material based on a polymer and which material comprises voids, typically in an amount of at least 5% by volume, typically from 10% to 55% by volume or from 10% to 45% by volume. The voids may be obtained by any of the known methods such as cells formed by gas. Alternatively, the voids may result from the incorporation of hollow fillers, such as hollow polymeric particles, hollow glass microspheres or hollow ceramic microspheres.

A polymeric foam layer for use herein has for example a thickness comprised between 100 and 6000 µm, between 200 and 4000 µm, between 500 and 2000 µm, or even between 800 and 1500 µm. As will be apparent to those skilled in the art, in the light of the present description, the preferred thickness of the polymeric foam layer will be dependent on the intended application.

A polymeric foam layer typically has a density comprised between 0.45 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer may be created in any of the known manners described in the art and include the use of a gas or blowing agent and/or including hollow particles into the composition for the polymeric foam layer. For example, according to one method to create a polymeric foam described in US 4,415,615, an acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated.

The multilayer pressure sensitive adhesive foam tapes for use herein, are particularly advantageous when compared to single-layer pressure sensitive adhesives, in that adhesion (quick adhesion) can be adjusted by the formulation of the first and second pressure sensitive adhesive layer (also commonly referred to as the skin layer), while other properties/requirements of the overall assembly such as application issues, deforming issues and energy distribution may be addressed by appropriate formulation of the polymeric foam layer (also commonly referred to as the core layer).

In a particular aspect, the polymeric foam layer comprises a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

In a typical aspect, the polymeric foam layer comprise a polymer base material selected from the group consisting of polyacrylates, polyurethanes, and any combinations, copolymers or mixtures thereof. According to another typical aspect, the polymeric foam layer comprise a polymer base material selected from the group consisting of polyacrylates, and any combinations, copolymers or mixtures thereof.

According to a particular aspect of the multilayer pressure sensitive adhesive foam tape for use herein, the polymeric foam layer comprises a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

According to still another particular aspect of the multilayer pressure sensitive adhesive foam tape for use herein, the polymeric foam layer comprises a polymer base material selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl (meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, and any combinations or mixtures thereof.

In a preferred aspect, the linear or branched alkyl (meth)acrylate ester is selected from the group consisting of iso-octyl (meth)acrylate, 2-ethylhexyl (meth)acrylate, 2-propylheptyl (meth)acrylate, butyl acrylate, 2-octyl (meth)acrylate, and any combinations or mixtures thereof; more preferably from the group consisting of iso-octyl acrylate, 2-octyl (meth)acrylate, 2-ethylhexyl (meth)acrylate and 2-propylheptyl (meth)acrylate, and any combinations or mixtures thereof; even more preferably from the group consisting of 2-ethylhexyl acrylate, 2-octyl acrylate and 2-propylheptyl acrylate, and any combinations or mixtures thereof.

According to an exemplary aspect, the polymeric foam layer comprises:
a) a (meth)acrylate copolymer component comprising:
   i. C₁-C₃₂ (meth)acrylic acid ester monomer units;
   ii. ethylenically unsaturated monomer units having functional groups selected from the group consisting of acid, hydroxyl, acid anhydride, epoxide, amine, amide groups, and any combinations thereof; and
   iii. optionally, further ethylenically unsaturated monomer units which are copolymerizable with monomer units (i) and/or (ii);
b) a hollow non-porous particulate filler material;
c) optionally, a further particulate filler material;
d) optionally, a crosslinking system;
e) optionally, a tackifying system; and
f) optionally, at least one pigment.

The various monomer units for use in the manufacture of the acrylic polymeric foam layer for use herein will be easily identified by those skilled in the art, in the light of the present description.

The ethylenically unsaturated monomer units having functional groups selected from the group consisting of acid, hydroxyl, acid anhydride, epoxide, amine, amide groups, and any combinations thereof, are advantageously selected from the group consisting of acrylic acid, methacrylic acid, itaconic acid, hydroxyalkyl acrylates, acrylamides and substituted acrylamides, acrylamines and substituted acrylamines, and any combinations or mixtures thereof. In a particularly advantageous aspect, the further co-monomer comprises acrylic acid.

The optional further ethylenically unsaturated monomer units which are copolymerizable with monomer units (i) and/or (ii) amy be advantageously selected from the group consisting of methyl methacrylate, tert-butyl (meth)acrylate, ethyl (meth)acrylate, n-propyl (meth)acrylate, isopropyl (meth)acrylate, iso-butyl (meth)acrylate, stearyl (meth)acrylate, phenyl (meth)acrylate, cyclohexyl (meth)acrylate, isobornyl (meth)acrylate, benzyl (meth)acrylate, isophoryl (meth)acrylate, N-vinyl caprolactam, isooctyl thio glycolate, and any combinations or mixtures thereof.

More typically, the second monomer having an ethylenically unsaturated group for use herein is for example selected from the group consisting of isobornyl (meth)acrylate, cyclohexyl (meth)acrylate, isophoryl (meth)acrylate, cyclohexyl (meth)acrylate, N-vinyl caprolactam, isooctyl thio glycolate, and any combinations or mixtures thereof. Even more typically, the second monomer is selected from the group of isobornyl (meth)acrylate, N-vinyl caprolactam and isooctyl thio glycolate,

In a particular aspect of the present disclosure, the hollow non-porous particulate filler material for use in the polymeric foam layer is selected from the group consisting of microspheres, expendable microspheres, glassbeads, glass microspheres, and any combinations thereof. In still a particular aspect, the hollow non-porous particulate filler material is selected from the group consisting of expandable microspheres, and glass microspheres, in particular glass microspheres the surface of which is provided with a hydrophobic or hydrophilic surface modification, preferably a hydrophobic surface modification.

Preferably, the filler material is selected from the group consisting of glass microspheres, the surface of which is provided with a hydrophobic or hydrophilic surface modification, preferably a hydrophobic surface modification. The hydrophobic surface modification of the hollow non-porous particulate filler material for use herein may be performed by any commonly known method.

Preferably, the hydrophobic surface modification of the hollow non-porous particulate filler material is performed with non-polar groups, preferably alkyl groups through covalent bonds, more preferably through covalent siloxane bonds, between the non-polar groups (preferably, alkyl groups) and the surface of the hollow non-porous particulate filler material.

The optional further particulate filler material, the crosslinking system, the tackifying system, and the pigment for use in the manufacture of the acrylic polymeric foam layer for use herein will be easily identified by those skilled in the art, in the light of the present description. Those may be advantageously chosen to be as disclosed above in the context of describing composition 1.

Composition 2 for use herein comprises
a) a linear block copolymer of the formula R - (G)m, wherein m is 1 or 2;
b) a multi-arm block copolymer of the formula Qn-Y, wherein:
   i. Q represents an arm of the multi-arm block copolymer and each arm independently has the formula G-R,
   ii. n represents the number of arms and is a whole number of at least 3; and
   iii. Y is the residue of a multifunctional coupling agent; wherein each R is a rubbery block comprising a polymerized conjugated diene, a hydrogenated derivative of a polymerized conjugated diene, or combinations thereof; and each G is a glassy block comprising a polymerized monovinyl aromatic monomer;
c) a first high Tg tackifier having a Tg of at least 60 degrees C, wherein the first high Tg tackifier is primarily compatible with the rubbery blocks;
d) a second high Tg tackifier having a Tg of at least 60 degrees C, wherein the second high Tg tackifier is primarily compatible with the glassy blocks; and
e) at least one component selected from the group consisting of a low Tg tackifier, a plasticizer, and combinations thereof.

In a preferred aspect of the present disclosure, composition 2 for use herein comprises at least two high Tg tackifiers.

The linear block copolymer can be described by the formula:

R - (G)m

wherein R represents a rubbery block, G represents a glassy block, and m, the number of glassy blocks, is 1 or 2. In some aspects, m is one, and the linear block copolymer is a diblock copolymer comprising one rubbery block and one glassy block. In some aspects, m is two, and the linear block copolymer comprises two glassy endblocks and one rubbery midblock, i.e., the linear block copolymer is a triblock copolymer.

Generally, a rubbery block exhibits a glass transition temperature (Tg) of less than room temperature. In some aspects, the Tg of the rubbery block is less than about 0 °C, or even less than about -10 °C. In some other aspects, the Tg of the rubbery block is less than about -40 °C, or even less than about -60 °C.

Generally, a glassy block exhibits a Tg of greater than room temperature. In some aspects, the Tg of the glassy block is at least about 40 °C, at least about 60 °C, at least about 80 °C, or even at least about 100 °C.

In a particular aspect, the rubbery block comprises a polymerized conjugated diene, a hydrogenated derivative of a polymerized conjugated diene, or combinations thereof. In some embodiments, the conjugated dienes comprise 4 to 12 carbon atoms. Exemplary conjugated dienes include butadiene, isoprene, ethylbutadiene, phenylbutadiene, piperylene, pentadiene, hexadiene, ethylhexadiene, and dimethylbutadiene. The polymerized conjugated dienes may be used individually or as copolymers with each other. In some aspects, the conjugated diene is selected from the group consisting of isoprene, butadiene, ethylene butadiene copolymers, and combinations thereof.

In some aspects, at least one glassy block comprises a polymerized monovinyl aromatic monomer. In some embodiments, both glassy blocks of a triblock copolymer comprise a polymerized monovinyl aromatic monomer. In some embodiments, the monovinyl aromatic monomers comprise 8 to 18 carbon atoms. Exemplary monovinyl aromatic monomers include styrene, vinylpyridine, vinyl toluene, alpha-methyl styrene, methyl styrene, dimethylstyrene, ethylstyrene, diethyl styrene, t-butylstyrene, di-n-butylstyrene, isopropylstyrene, other alkylated-styrenes, styrene analogs, and styrene homologs. In some embodiments, the monovinyl aromatic monomer is selected from the group consisting of styrene, styrene-compatible monomers or monomer blends, and combinations thereof.

As used herein, "styrene-compatible monomers or monomer blends" refers to a monomer or blend of monomers, which may be polymerized or copolymerized, that preferentially associate with polystyrene or with the polystyrene endblocks of a block copolymer. The compatibility can arise from actual copolymerization with monomeric styrene; solubility of the compatible monomer or blend, or polymerized monomer or blend in the polystyrene phase during hot melt or solvent processing; or association of the monomer or blend with the styrene-rich phase domain on standing after processing.

In some aspects, the linear block copolymer is diblock copolymer. In some aspects, the diblock copolymer is selected from the group consisting of styrene-isoprene, and styrene-butadiene. In some aspects, the linear block copolymer is a triblock copolymer. In some aspects the triblock copolymer is selected from the group consisting of styrene-isoprene-styrene, styrene-butadiene-styrene, styrene-ethylene-butadiene-styrene, and combinations thereof. Diblock and triblock copolymers are commercially available, e.g., those under the trade name VECTOR available from Dexco Polymer LP, Houston, Texas; and those available under the trade name KRATON available from Kraton Polymers U.S. LLC, Houston, Texas. As manufactured and/or purchased, triblock copolymers may contain some fraction of diblock copolymer as well.

In some aspects, the multi-arm block copolymer for use herein has the general formula Qn-Y, wherein Q represents an arm of the multi-arm block copolymer; n represents the number of arms and is a whole number of at least 3, i.e., the multi-arm block copolymer is a star block copolymer. Y is the residue of a multifunctional coupling agent. Each arm, Q, independently has the formula G-R, wherein G is a glassy block; and R is a rubbery block. In some aspects, n ranges from 3-10. In some embodiments, n ranges from 3-5. In some aspects, n is 4. In some aspects, n is equal to 6 or more.

Exemplary rubbery blocks include polymerized conjugated dienes, such as those described above, hydrogenated derivatives of a polymerized conjugated diene, or combinations thereof. In some aspects, the rubbery block of at least one arm comprises a polymerized conjugated diene selected from the group consisting of isoprene, butadiene, ethylene butadiene copolymers, and combinations thereof. In some aspects, the rubbery block of each arm comprises a polymerized conjugated diene selected from the group consisting of isoprene, butadiene, ethylene butadiene copolymers, and combinations thereof.

Exemplary glassy blocks include polymerized mono vinyl aromatic monomers, such as those described above. In some aspects, the glassy block of at least one arm is selected from the group consisting of styrene, styrene-compatible blends, and combinations thereof. In some aspects, the glassy block of each arm is selected from the group consisting of styrene, styrene-compatible blends, and combinations thereof.

In some aspects, the multi-arm block copolymer is a polymodal block copolymer. As used herein, the term "polymodal" means that the copolymer comprises endblocks having at least two different molecular weights. Such a block copolymer may also be characterized as having at least one "high" molecular weight endblock, and at least one "low" molecular weight endblock, wherein the terms high and low are used relative to each other. In some aspects, the ratio of the number average molecular weight of the high molecular weight endblock, (Mn)H, relative to the number average molecular weight of the low molecular weight endblock,(Mn)L, is at least about 1.25.

In some aspects, (Mn)H ranges from about 5,000 to about 50,000. In some aspects, (Mn)H is at least about 8,000, and in some aspects at least about 10,000. In some aspects, (Mn)H is no greater than about 35,000. In some aspects, (Mn)L ranges from about 1,000 to about 10,000. In some aspects, (Mn)L is at least about 2,000, and, in some aspects, at least about 4,000. In some aspects, (Mn)L is less than about 9,000, and, in some aspects, less than about 8,000.

In some aspects, the multi-arm block copolymer is an asymmetric block copolymer. As used herein, the term "asymmetric" means that the arms of the block copolymer are not all identical. Generally, a polymodal block copolymer is an asymmetric block copolymer (i.e., a polymodal asymmetric block copolymer) as not all arms of a polymodal block copolymer are identical since the molecular weights of the end blocks are not all the same. In some embodiments, the block copolymers of the present disclosure are polymodal, asymmetric block copolymers. Methods of making asymmetric, polymodal block copolymers are described in, e.g., U.S. Patent No. 5,296,547.

Generally, the multifunctional coupling agent may be any polyalkenyl coupling agent or other material known to have functional groups that can react with carbanions of the living polymer to form linked polymers. The polyalkenyl coupling agent may be aliphatic, aromatic, or heterocyclic. Exemplary aliphatic polyalkenyl coupling agents include polyvinyl and polyalkyl acetylenes, diacetylenes, phosphates, phosphites, and dimethacrylates (e.g., ethylene dimethacrylate). Exemplary aromatic polyalkenyl coupling agents include polyvinyl benzene, polyvinyl toluene, polyvinyl xylene, polyvinyl anthracene, polyvinyl naphthalene, and divinyldurene. Exemplary polyvinyl groups include divinyl, trivinyl, and tetravinyl groups. In some aspects, divinylbenzene (DVB) may be used, and may include o- divinyl benzene, m-divinyl benzene, p-divinyl benzene, and mixtures thereof. Exemplary heterocyclic polyalkenyl coupling agents include divinyl pyridine, and divinyl thiophene. Other exemplary multifunctional coupling agents include silicon halides, polyepoxides, polyisocyanates, polyketones, polyanhydrides, and dicarboxylic acid esters.

Composition 2 for use in the present disclosure comprises at least two high Tg tackifiers, each having a glass transition temperature (Tg) of at least 60 degrees Celsius (° C). As used herein, the terms "high glass transition temperature tackifier" and "high Tg tackifier" refers to a tackifier having a glass transition temperature of at least 60 °C. In some aspects, at least one of the high Tg tackifiers has a Tg of at least 65 °C, or even at least 70°C. In some aspects, both high Tg tackifiers have a Tg of at least 65 °C, and in some aspects, both high Tg tackifiers have a Tg of at least 70 °C. In some aspects, the first high Tg tackifier has a softening point of at least about 115 °C, and, in some aspects, at least about 120 °C. In some aspects, the second high Tg tackifier has a softening point of at least about 115 °C, and, in some aspects, at least about 120 °C.

The first high Tg tackifier is primarily compatible with at least some of the rubbery blocks. In some aspects, the first high Tg tackifier is primarily compatible with the rubbery block of the linear block copolymer and each rubbery block of a multi-arm block copolymer.

As used herein, a tackifier is "compatible" with a block if it is miscible with that block. Generally, the miscibility of a tackifier with a block can be determined by measuring the effect of the tackifier on the Tg of that block. If a tackifier is miscible with a block it will alter (e.g., increase) the Tg of that block.

A tackifier is "primarily compatible" with a block if it is at least miscible with that block, although it may also be miscible with other blocks. For example, a tackifier that is primarily compatible with a rubbery block will be miscible with the rubbery block, but may also be miscible with a glassy block.

Generally, resins having relatively low solubility parameters tend to associate with the rubbery blocks; however, their solubility in the glassy blocks tends to increase as the molecular weights or softening points of these resins are lowered. Exemplary tackifiers that are primarily compatible with the rubbery blocks include polymeric terpenes, heterofunctional terpenes, coumarone-indene resins, rosin acids, esters of rosin acids, disproportionated rosin acid esters, hydrogenated, C5 aliphatic resins, C9 hydrogenated aromatic resins, C5/C9 aliphatic/aromatic resins, dicyclopentadiene resins, hydrogenated hydrocarbon resins arising from C5/C9 and dicyclopentadiene precursors, hydrogenated styrene monomer resins, and blends thereof.

Composition 2 also comprises a second high Tg tackifier that is primarily compatible with the at least one glassy block. In some aspects, the second high Tg tackifier is primarily compatible with the glassy block(s) of the linear block copolymer. In some embodiments, the second high Tg tackifier is primarily compatible with each glassy block of the multi-arm block copolymer. Generally, a tackifier that is primarily compatible with a glassy block is miscible with the glassy block and may be miscible with a rubbery block.

Generally, resins having relatively high solubility parameters tend to associate with the glassy blocks; however, their solubility in the rubbery blocks tends to increase as the molecular weights or softening points of these resins are lowered. Exemplary tackifiers that are primarily compatible with the glassy blocks include coumarone-indene resins, rosin acids, esters of rosin acids, disproportionated rosin acid esters, C9 aromatics, alpha-methyl styrene, C9/C5 aromatic-modified aliphatic hydrocarbons, and blends thereof.

In some aspects, the pressure sensitive adhesives of the present disclosure further comprise at least one component selected from the group consisting of a low Tg tackifier, a plasticizer, and combinations thereof. As used herein, the terms "low glass transition temperature tackifier" and "low Tg tackifier" refers to a tackifier having a glass transition temperature of less than 60 °C. Exemplary low Tg tackifiers include polybutenes.

Generally, a plasticizer is compatible with one or more blocks of the linear block copolymer, and/or one or more blocks of the multi-arm block copolymer. Generally, a plasticizer that is compatible with a block will be miscible with that block and will lower the Tg of that block. Exemplary plasticizers include naphthenic oils, liquid polybutene resins, polyisobutylene resins, and liquid isoprene polymers.

In some aspects, the ratio of the total weight of all multi-arm block copolymers to the total weight of all linear block copolymers ranges from 5.7:1 to 1.5:1. In some aspects, this ratio is no greater than 4:1, or even no greater than 3:1. In some aspects, this ratio is no less than 1.8:1, or even no less than 2:1.

In some aspects, the ratio of the total weight of all block copolymers to the total weight of all high Tg tackifiers ranges from 1.2:1 to 1:1.2. In some aspects, this ratio is no greater that 1.15:1, or even no greater than 1.1:1. In some aspects, this ratio is no less than 1:1.15, or even no less than 1:1.1.

In some aspects, the ratio of the total weight of high Tg tackifier(s) that are primarily compatible with the rubbery blocks to the total weight of the high Tg tackifier(s) that are primarily compatible with the glassy blocks ranges from 9:1 to 0.67:1 In some aspects, this ratio is no greater than 4:1, and, in some aspects, no greater than 3:1. In some aspects, this ratio is no less than 1:1, or even no less than 1.85:1.

In some aspects, the total amount of the components selected from the group consisting of low Tg tackifiers, plasticizers, and combinations thereof, expressed as a percent by weight (wt %) based on the total weight of the main adhesive components (i.e., the block copolymers, the high Tg tackifiers, the low Tg tackifiers and the plasticizers), is in the range of 2 to 10 wt %. In some aspects, the total amount of these components is at least 4 wt %, and, in some aspects, at least 5 wt % based on the total weight of the main adhesive components. In some aspects, the total amount of these components is no greater than 8 wt %, or even no greater than 7 wt % based on the total weight of the main adhesive components.

In some aspects, composition 2 is a hot melt adhesive. As used herein, a hot melt adhesive is a polymer or blended polymeric material with a melt viscosity profile such that it can be coated on a substrate or carrier in a thin layer at a process temperature significantly above normal room temperature, but retains useful pressure-sensitive adhesive characteristics at room temperature.

Composition 2 for use herein may be made using methods known in the art. For example, it can be made by dissolving the block copolymers, suitable tackifiers, any plasticizer(s), and any other additives in a suitable solvent, creating a solvent-based adhesive. The adhesive may then be coated onto a substrate (e.g., release liner, tape backing, core, or panel) using conventional means (e.g., knife coating, roll coating, gravure coating, rod coating, curtain coating, spray coating, air knife coating). In some aspects, the adhesive is then dried to remove at least some of the solvent. In some aspects, substantially all of the solvent is removed.

In some aspects, composition 2 is prepared in a substantially solvent-free process (i.e., the adhesive contain no greater than about 10 wt. % solvent, in some aspects, no greater than about 5 wt. % solvent, and in some aspects no greater than 1 wt. % solvent or even no greater than trace amounts of solvent (i.e., essentially no solvent). In some aspects, the pressure sensitive adhesive may contain residual solvents, e.g., adhesives may be prepared in solvent, and the solvent is removed prior to subsequent processing, e.g., coating. Generally, the residual solvent is present as no greater than about 5%, in some aspects, no greater than about 1%, or even no greater than trace amounts of solvent (i.e., essentially no solvent). Such substantially solvent-free processes are known and include, e.g., compounding by calendering or roll milling, and extruding (e.g., single. screw, twin screw, disk screw, reciprocating single screw, pin barrel single screw, etc.). Commercially available equipment such as BRABENDER or BANBURY internal mixers are also available to batch mix the adhesive compositions. After compounding, the adhesive may be coated through a die into a desired form, such as a layer of adhesive, or it may be collected for forming at a later time.

In some aspects, solvent-based adhesives may be used. In some aspects, such adhesives comprise at least about 20% by weight solvent, in some aspects, at least about 40%, at least about 50%, or even at least about 60% by weight solvent. Any known method of coating and drying solvent based adhesives may be used.

According to an advantageous aspect of method according to the present disclosure, the multilayer adhesive foam tape is obtained by a method selected from the group consisting of hotmelt co-extrusion and wet-in-wet coating. According to this specific execution, the multilayer adhesive foam tape is obtained by a wet-in-wet coating technique whereby curable (liquid) precursors of the first pressure sensitive adhesive layer, the second pressure sensitive adhesive layer and the polymeric foam layer are superimposed, and then cured, preferably with actinic radiation, e-beam radiation or by thermal curing.

Exemplary "wet-in-wet" production processes for use herein are described in details in e.g. WO-A1-2011094385 (Hitschmann et al.) or in EP-A1-0259094 (Zimmerman et al.), the full disclosures of which are herewith incorporated by reference.

In the context of the present disclosure, the term precursor is meant to refer to the material from which the polymers of the corresponding polymer layers of the multilayer pressure sensitive adhesive foam tape can be obtained by curing. The term precursor is also used to denote the stack of layers comprising at least two layers of liquid precursors from which the multilayer pressure sensitive adhesive foam tape for use in the present disclosure can be obtained by curing. Curing may typically be performed by actinic radiation such as UV, γ (gamma) or e-beam radiation or by thermal curing.

Practicing the (continuous and self-metered) method for manufacturing a multilayer pressure sensitive adhesive assembly as above-described is well within the capabilities of the person skilled in the art, in the light of the present disclosure together with the disclosure of WO-A1-2011094385 (Hitschmann et al.), the content of which is incorporated herewith by reference. In particular, suitable settings and configurations for the coating apparatus, coating knives and coating stations, for use in this particular aspect of the method for manufacturing a multilayer pressure sensitive adhesive assembly, will be easily identified by those skilled in the art, in the light of the present disclosure together with the disclosure of WO-A1-2011094385 (Hitschmann et al.).

According to a typical aspect of the method according to the disclosure, the first pressure sensitive adhesive layer and the second pressure sensitive adhesive layer for use herein have both a composition according to composition 1 or according to composition 2.

According to one exemplary aspect, the first pressure sensitive adhesive layer and the second pressure sensitive adhesive layer have identical compositions.

According to another exemplary aspect, the first pressure sensitive adhesive layer and the second pressure sensitive adhesive layer have dissimilar (i.e. non-identical) compositions, whilst still both having a composition according to either composition 1 or 2.

Advantageously, the multilayer pressure sensitive adhesive foam tapes for use herein, exhibit excellent heat bond ageing resistance and/or heat/humidity bond ageing on various challenging-to-bond substrates, particularly LSE and MSE substrates, more particularly, LSE substrates.

According to a particular aspect, multilayer pressure sensitive adhesive foam tapes exhibit a decrease in peel strength of less than 40%, preferably less than 30%, more preferably less than 25%, even more preferably less than 20%, still more preferably less than 15%, yet more preferably less than 10%, most preferably less than 5%, after heat bond ageing on polypropylene, when measured according to the heat bond ageing test method described in the experimental section.

In an advantageous aspect of the method according to the present disclosure, the adhering steps b) and/or c) are performed without using an adhesion promoter, in particular a priming composition or a tie layer.

The first part and the second part for use herein comprise a thermoplastic or a thermosetting organic polymer and are meant to be used for outdoor applications. Parts for use herein may be easily identified by those skilled in the art in the light of the present disclosure, and are not particularly limited.

Typical parts for use herein include, but are not limited to, those used for exterior applications selected from the group of automotive, construction, traffic signage, and graphic signage applications.

Exemplary first part and second parts for use herein are independently selected from the group consisting of cladding, exterior trims, pillar trims, emblems, rear mirror assemblies, spoilers, front spoiler lips, grip molding for trunk lids, hood extensions, wheel arches, body side molding and inlays, tail light assemblies, sonar brackets, license plate brackets, fenders, fender modules, front grilles, headlight cleaning brackets, antennas, roof ditch moldings, roof railings, sunroof frames, front screen moldings, rear screen moldings, side wind visors, automotive body parts, architectural panels, structural glazing, traffic signs, informative and advertising panels, reflectors and linear delineation systems (LDS), raised pavement markers, platforms or display supports bearing visually observable information, and any combinations thereof.

According to a particular aspect of the present disclosure, the first parts and the second parts for use herein are used for exterior automotive applications, and are independently selected from the group consisting of cladding, exterior trims, pillar trims, emblems, rear mirror assemblies, spoilers, front spoiler lips, grip molding for trunk lids, hood extensions, wheel arches, body side molding and inlays, tail light assemblies, sonar brackets, license plate brackets, fenders, fender modules, front grilles, headlight cleaning brackets, antennas, roof ditch moldings, roof railings, sunroof frames, front screen moldings, rear screen moldings, side wind visors, automotive body parts, in particular door, roof, hood, trunk lid, bumper, side panels, and any combinations thereof.

According to another particular aspect of the present disclosure, the first parts and the second parts for use herein are used for exterior construction applications, and are independently selected from the group consisting of architectural panels, structural glazing, and any combinations thereof.

According to still another particular aspect of the present disclosure, the first parts and the second parts for use herein are used for exterior traffic signage and graphic signage applications, and are independently selected from the group consisting of traffic signs, informative and advertising panels, reflectors and linear delineation systems (LDS), raised pavement markers, platforms or display supports bearing visually observable information, and any combinations thereof.

The first parts and the second parts for use herein comprise a thermoplastic or a thermosetting organic polymer. Thermoplastic and thermosetting organic polymers for use herein may be easily identified by those skilled in the art in the light of the present disclosure, and are not particularly limited.

Exemplary thermoplastic and thermosetting organic polymers for use herein include, but are not limited to, those selected from the group consisting of polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); clear coat surfaces, in particular clear coats for vehicles like a car or coated surfaces for industrial applications; and any combinations or mixtures thereof.

In a particular aspect, the thermoplastic and thermosetting organic polymers for use herein are selected from the group consisting of polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); and any combinations or mixtures thereof. More particularly, the thermoplastic and thermosetting organic polymers for use herein are selected from the group consisting of polypropylene (PP), polyethylene (PE), thermoplastic polyolefins (TPO); thermoplastic elastomers (TPE); and any combinations or mixtures thereof.

In another particular aspect, the thermoplastic and thermosetting organic polymers for use herein are selected from the group consisting of polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); clear coat surfaces, in particular clear coats for vehicles like a car or coated surfaces for industrial applications; and any combinations or mixtures thereof. More particularly, the thermoplastic and thermosetting organic polymers for use herein are selected from the group consisting of acrylonitrile butadiene styrene (ABS); polycarbonates (PC); clear coat surfaces, in particular clear coats for vehicles; and any combinations or mixtures thereof.

According to a particular aspect of the present disclosure, the first pressure sensitive adhesive layer and the second pressure sensitive adhesive layer have both a composition according to composition 1 as described above and are used for adhering a first part and a second part comprising a thermoplastic or a thermosetting organic polymer selected from the group consisting of polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); and any combinations or mixtures thereof.

According to another particular aspect of the present disclosure, the first pressure sensitive adhesive layer and the second pressure sensitive adhesive layer have both a composition according to composition 2 as described above and are used for adhering a first part and a second part comprising a thermoplastic or a thermosetting organic polymer selected from the group consisting of polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); clear coat surfaces, in particular clear coats for vehicles like a car or coated surfaces for industrial applications; and any combinations or mixtures thereof.

In a typical aspect of the present disclosure, the first parts and the second parts for use herein are exposed to (intense) weathering conditions, in particular wind, rain, and extreme temperatures, such as e.g. high temperatures up to 90°C or low temperatures down to -40°C.

According to a particular aspect of the present disclosure, the first parts and the second parts for use herein are exposed to headwind and/or tailwind, in particular frontal headwind. This particular aspect is in particular applicable for those situations where the first parts and the second parts are used for exterior transportation applications, in particular exterior automotive and aerospace applications, more in particular automotive applications.

According to another aspect, the present disclosure is directed to a composite assembly comprising:
a) a first part and a second part used for outdoor applications and comprising a thermoplastic or a thermosetting organic polymer; and
b) a multilayer pressure sensitive adhesive foam tape as described above, wherein the first pressure sensitive adhesive layer is adhered to the first part, and the second pressure sensitive adhesive layer is adhered to the second part.

Particular and preferred aspects relating to the first part and the second part, the multilayer pressure sensitive adhesive foam tape, the first pressure sensitive adhesive layer, the polymeric foam layer, and the second pressure sensitive adhesive layer for use in the composite assembly of the present disclosure, are identical to those detailed above in the context of describing the method of adhering a first part to a second part.

According to still another aspect, the present disclosure relates to the use of a multilayer pressure sensitive adhesive foam tape as described above for adhering a first part to a second part, wherein the first part and the second part are used for outdoor applications and comprise a thermoplastic or a thermosetting organic polymer.

In a particular aspect, the first part and the second part are exposed to weathering conditions, in particular wind, rain, and extreme temperatures. In a more particular aspect, the first part and the second part are exposed to headwind and/or tailwind, in particular frontal headwind.

According to an exemplary aspect, the first part and the second part are exposed to temperatures above 50°C, above 70°C, above 90°C, or even above 100°C. According to another exemplary aspect, the first part and the second part are exposed to temperatures below 0°C, below -10°C, below -20°C, below -30°C, or even below -40°C.
Item 1 is a method of adhering a first part to a second part, wherein the first part and the second part are used for outdoor applications and comprise a thermoplastic or a thermosetting organic polymer, and wherein the method comprises the steps of:
   a) providing a multilayer pressure sensitive adhesive foam tape comprising:
      i. a polymeric foam layer comprising two major surfaces;
      ii. a first pressure sensitive adhesive layer adjacent to one major surface of the polymeric foam layer;
      iii. a second pressure sensitive adhesive layer adjacent to the polymeric foam layer on the major surface which is opposed to the major surface or the polymeric foam layer adjacent to the first pressure sensitive adhesive layer, and wherein the first pressure sensitive adhesive layer, the polymeric foam layer and the second pressure sensitive adhesive layer are superimposed;
   b) adhering the first pressure sensitive adhesive layer to the first part; and
   c) adhering the second part to the second pressure sensitive adhesive layer;
   wherein the first pressure sensitive adhesive layer and the second pressure sensitive adhesive layer both have a composition selected from either:
   A) composition (1) comprising:
      a) 60 parts by weight or greater of a low Tg (meth)acrylate copolymer (component) comprising:
         i. C₁-C₃₂ (meth)acrylic acid ester monomer units;
         ii. optionally, acid functional ethylenically unsaturated monomer units;
         iii. optionally, non-acid functional, ethylenically unsaturated polar monomer units;
         iv. optionally, vinyl monomer units; and
         v. optionally, multifunctional (meth)acrylate monomer units, and
      b) up to 40 parts by weight of a high Tg (meth)acrylate copolymer having a weight average molecular weight (Mw) of above 20,000 Daltons, and comprising:
         i. high Tg (meth)acrylic acid ester monomer units;
         ii. optionally, acid functional ethylenically unsaturated monomer units;
         iii. optionally, low Tg (meth)acrylic acid ester monomer units;
         iv. optionally, non-acid functional, ethylenically unsaturated polar monomer units;
         v. optionally, vinyl monomer units;
         vi. optionally, a chlorinated polyolefinic (co)polymer; and
      c) optionally, up to 20 parts by weight of a hydrogenated hydrocarbon tackifier, based on 100 parts by weight of copolymers a) and b);
      or;
   B) composition (2) comprising:
      a) a linear block copolymer of the formula R - (G)m, wherein m is 1 or 2;
      b) a multi-arm block copolymer of the formula Qn-Y, wherein:
         i. Q represents an arm of the multi-arm block copolymer and each arm independently has the formula G-R,
         ii. n represents the number of arms and is a whole number of at least 3; and
         iii. Y is the residue of a multifunctional coupling agent; wherein each R is a rubbery block comprising a polymerized conjugated diene, a hydrogenated derivative of a polymerized conjugated diene, or combinations thereof; and each G is a glassy block comprising a polymerized monovinyl aromatic monomer;
      c) a first high Tg tackifier having a Tg of at least 60 degrees C, wherein the first high Tg tackifier is primarily compatible with the rubbery blocks;
      d) a second high Tg tackifier having a Tg of at least 60 degrees C, wherein the second high Tg tackifier is primarily compatible with the glassy blocks; and
      e) at least one component selected from the group consisting of a low Tg tackifier, a plasticizer, and combinations thereof.
Item 2 is a method according to item 1, wherein the first pressure sensitive adhesive layer and the second pressure sensitive adhesive layer have both a composition according to composition 1 or according to composition 2.
Item 3 is a method according to item 1 or 2, wherein the first pressure sensitive adhesive layer and the second pressure sensitive adhesive layer have identical compositions.
Item 4 is a method according to any of the preceding items, wherein the first pressure sensitive adhesive layer and the second pressure sensitive adhesive layer have dissimilar compositions.
Item 5 is a method according to any of the preceding items, wherein composition 2 comprises at least two high Tg tackifiers.
Item 6 is a method according to any of the preceding items, wherein the first part and the second part are exposed to weathering conditions, in particular wind, rain, and extreme temperatures.
Item 7 is a method according to any of the preceding items, wherein the first part and the second part are exposed to headwind and/or tailwind, in particular frontal headwind.
Item 8 is a method according to any of the preceding items, wherein the first part and the second part are used for exterior applications selected from the group of automotive, construction, traffic signage, and graphic signage applications.
Item 9 is a method according to any of the preceding items, wherein the first part and the second part are used for exterior applications, and are independently selected from the group consisting of cladding, exterior trims, pillar trims, emblems, rear mirror assemblies, spoilers, front spoiler lips, grip molding for trunk lids, hood extensions, wheel arches, body side molding and inlays, tail light assemblies, sonar brackets, license plate brackets, fenders, fender modules, front grilles, headlight cleaning brackets, antennas, roof ditch moldings, roof railings, sunroof frames, front screen moldings, rear screen moldings, side wind visors, automotive body parts, architectural panels, structural glazing, traffic signs, informative and advertising panels, reflectors and linear delineation systems (LDS), raised pavement markers, platforms or display supports bearing visually observable information, and any combinations thereof.
Item 10 is a method according to item 9, wherein the first part and the second part are used for exterior automotive applications, and are independently selected from the group consisting of cladding, exterior trims, pillar trims, emblems, rear mirror assemblies, spoilers, front spoiler lips, grip molding for trunk lids, hood extensions, wheel arches, body side molding and inlays, tail light assemblies, sonar brackets, license plate brackets, fenders, fender modules, front grilles, headlight cleaning brackets, antennas, roof ditch moldings, roof railings, sunroof frames, front screen moldings, rear screen moldings, side wind visors, automotive body parts, in particular door, roof, hood, trunk lid, bumper, side panels, and any combinations thereof.
Item 11 is a method according to item 9, wherein the first part and the second part are used for exterior construction applications, and are independently selected from the group consisting of architectural panels, structural glazing, and any combinations thereof.
Item 12 is a method according to item 9, wherein the first part and the second part are used for exterior traffic signage and graphic signage applications, and are independently selected from the group consisting of traffic signs, informative and advertising panels, reflectors and linear delineation systems (LDS), raised pavement markers, platforms or display supports bearing visually observable information, and any combinations thereof.
Item 13 is a method according to any of the preceding items, wherein the thermoplastic or thermosetting organic polymer is selected from the group consisting of polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); clear coat surfaces, in particular clear coats for vehicles like a car or coated surfaces for industrial applications; and any combinations or mixtures thereof.
Item 14 is a method according to any of items 1 to 9, wherein the first pressure sensitive adhesive layer and the second pressure sensitive adhesive layer have both a composition according to composition 1 and are used for adhering a first part and a second part comprising a thermoplastic or a thermosetting organic polymer selected from the group consisting of polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); and any combinations or mixtures thereof.
Item 15 is a method according to any of items 1 to 9, wherein the first pressure sensitive adhesive layer and the second pressure sensitive adhesive layer have both a composition according to composition 2 and are used for adhering a first part and a second part comprising a thermoplastic or a thermosetting organic polymer selected from the group consisting of polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); clear coat surfaces, in particular clear coats for vehicles like a car or coated surfaces for industrial applications; and any combinations or mixtures thereof.
Item 16 is a method according to any of the preceding items, wherein the polymeric foam layer comprises a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.
Item 17 is a method according to any of the preceding items, wherein the polymeric foam layer comprises a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.
Item 18 is a method according to any of the preceding items, wherein the polymeric foam layer comprises:
   a) a (meth)acrylate copolymer component comprising:
      i. C₁-C₃₂ (meth)acrylic acid ester monomer units;
      ii. ethylenically unsaturated monomer units having functional groups selected from the group consisting of acid, hydroxyl, acid anhydride, epoxide, amine, amide groups, and any combinations thereof; and
      iii. optionally, further ethylenically unsaturated monomer units which are copolymerizable with monomer units (i) and/or (ii);
   b) a hollow non-porous particulate filler material;
   c) optionally, a further particulate filler material;
   d) optionally, a crosslinking system;
   e) optionally, a tackifying system; and
   f) optionally, at least one pigment.
Item 19 is a method according to item 18, wherein the hollow non-porous particulate filler material is selected from the group consisting of microspheres, expendable microspheres, glassbeads, glass microspheres, and any combinations thereof.
Item 20 is a method according to item 18, wherein the hollow non-porous particulate filler material is selected from the group consisting of expandable microspheres, and glass microspheres, in particular glass microspheres the surface of which is provided with a hydrophobic or hydrophilic surface modification, preferably a hydrophobic surface modification.
Item 21 is a method according to any of the preceding items, wherein the adhering steps b) and/or c) are performed without using an adhesion promoter, in particular a priming composition or a tie layer.
Item 22 is a method according to any of the preceding items, wherein the multilayer adhesive foam tape is obtained by a method selected from the group consisting of hotmelt co-extrusion and wet-in-wet coating.
Item 23 is a method according to any of the preceding items, wherein the multilayer adhesive foam tape is obtained by a wet-in-wet coating technique whereby curable (liquid) precursors of the first pressure sensitive adhesive layer, the second pressure sensitive adhesive layer and the polymeric foam layer are superimposed, and then cured, preferably with actinic radiation, e-beam radiation or by thermal curing.
Item 24 is a composite assembly comprising:
   a) a first part and a second part used for outdoor applications and comprising a thermoplastic or a thermosetting organic polymer; and
   b) a multilayer pressure sensitive adhesive foam tape as described in any of items 1 to 23, wherein the first pressure sensitive adhesive layer is adhered to the first part, and the second pressure sensitive adhesive layer is adhered to the second part.
Item 25 is the use of a multilayer pressure sensitive adhesive foam tape as described in any of items 1 to 23 for adhering a first part to a second part, wherein the first part and the second part are used for outdoor applications and comprise a thermoplastic or a thermosetting organic polymer.
Item 26 is the use according to item 25, wherein the first part and the second part are exposed to weathering conditions, in particular wind, rain, and extreme temperatures.
Item 27 is the use according to any of item 25 or 26, wherein the first part and the second part are exposed to headwind and/or tailwind, in particular frontal headwind.
Item 28 is the use according to any of items 25 to 27, wherein the first part and the second part are exposed to temperatures above 50°C, above 70°C, above 90°C, or even above 100°C.
Item 29 is the use according to any of items 25 to 28, wherein the first part and the second part are exposed to temperatures below 0°C, below -10°C, below -20°C, below - 30°C, or even below -40°C.

### EXAMPLES

The invention is further illustrated by the following examples. These examples are merely for illustrative purposes only and are not meant to be limiting on the scope of the appended claims.

### Test methods and procedures

### Test Substrates

The multilayer pressure sensitive adhesive foam tapes according to the present disclosure are tested for their adhesive properties on following substrate:
- Steel: Stainless Steel (SS) plate ("Edelstahl 1.4301 IIID", 150 x 50 x 2 mm), available from Rocholl GmbH, Aglatershausen, Germany.
- PP: polypropylene plate ("Kunststoffprüfkörper PP nature"; Fabrikat Simona HWST; 150cm x 50cm x 2 mm), available from Rocholl GmbH, Aglatershausen, Germany.

Prior to testing, the substrates, are cleaned as follows:
- The SS plates are first cleaned with MEK and n-heptane, dried with a tissue, and then cleaned with MEK and dried with a tissue.
- The PP panels are cleaned first with a dry tissue applied with gentle force to remove any residuals / waxy compounds on the surface and then cleaned with a mixture of isopropyl alcohol : distilled water (1:1) and dried with a tissue.

### Test Methods applied:

***90°***-***Peel***-***test at 300 mm*/*min (according to Test Method, Finat No. 2, 8^{th} edition 2009)*** Multilayer pressure sensitive adhesive foam tapes according to the present disclosure and having a width of 12.7 mm and a length > 120 mm are cut out in the machine direction from the sample material.

For test sample preparation the liner is first removed from the one adhesive side and placed on an aluminum strip having the following dimension 22 x 1.6 cm, 0.13 mm thickness. Then, the adhesive coated side of each PSA foam tape is placed, after the liner is removed, with its adhesive side down on a clean test panel using light finger pressure. Next, the test samples are rolled twice in each direction with a standard FINAT test roller (weight 6.8 kg) at a speed of approximately 10 mm per second to obtain intimate contact between the adhesive mass and the surface. After applying the pressure sensitive adhesive foam tapes to the test panel, the test samples are allowed to dwell at ambient room temperature (23°C +/- 2°C, 50% relative humidity +/-5%) prior to testing.
For peel testing the test samples are in a first step clamped in the lower movable jaw of a Zwick tensile tester (Model Z005 commercially available from Zwick/Roell GmbH, Ulm, Germany). The multilayer pressure sensitive adhesive foam tapes are folded back at an angle of 90° and their free ends grasped in the upper jaw of the tensile tester in a configuration commonly utilized for 90° measurements. The tensile tester is set at 300 mm per minute jaw separation rate. Test results are expressed in Newton per 10 mm (N/10 mm). The quoted peel values are the average of two 90°-peel measurements.

The 90° peel testing after heat ageing is tested as follows:
First, the samples are prepared as previously described with an aluminum backing and applied onto the test substrates. After storage of the samples in a constant climate room for 1 hour at room temperature (at 23 +/- 2 °C and 50% relative humidity +/-5%) the test panels are placed in an oven at 90°C for 3 days. After oven aging the test panels are reconditioned in a constant climate room for 24 hours and the 90° peel forces are measured as described above.

### Static Shear-Test (according to FINAT TM 8, 8^{th} edition 2009)

The test is carried out at ambient room temperature (23°C +/- 2°C and 50% +/- 5% relative humidity). Test specimen are cut out having a dimension of 12.7 mm by 25.4 mm. The liner is then removed from one side of the test specimen and the adhesive is adhered onto to an aluminum strip having the following dimension 11 cm x 1.6 cm, 0.13 mm thickness and comprising a hole for the weight. The second liner is thereafter removed from the test specimen and the small panel with the test specimen is applied onto the respective test panel (PP) having the following dimensions: 50 mm x 100 mm x 2 mm at the short edge. A 1000g weight is then put onto the sandwich construction for 60 minutes. Each sample is then placed into a vertical shear-stand (+2° disposition) with automatic time logging and a 1000g weight was then hung into the hole of the aluminum stripe. The time until failure is measured and recorded in minutes. Target value is 10.000 minutes. Per test specimen three samples are measured.

### Molecular Weight measurement

The weight average molecular weight of the polymers is determined using conventional gel permeation chromatography (GPC). The GPC apparatus obtained from Waters, included a high pressure liquid chromatography pump (Model 600E), an auto-sampler (Model 712 WISP), and a refractive index detector (Model 2414). The chromatograph is equipped with three Mixed Bed type B (10µm particle) columns 300 mm x 7.5 mm from Agilent.

Polymeric solutions for testing are prepared by dissolving a polymer in 1ml tetrahydrofuran at a concentration of 0.3% polymer by weight. 300 µl etheral alcoholic diazomethane solution (0.4 mol/1) is added and the sample is kept for 60 minutes at room temperature. The sample is then blown to dryness under a stream of nitrogen at room temperature. The dried sample is dissolved in THF, containing 0.1% toluene, to yield a 0.1% w/v solution. The solution is then filtered through a 0.45 micron polytetrafluoroethylene filter. 100 µl of the resulting solution is injected into the GPC and eluted at a rate of 1.00 milliliter per minute through the columns maintained at 40°C. Toluene is used as a flow rate marker. The system is calibrated with polystyrene standards (10 standards, divided in 3 solutions in the range between 470 Da and 7300000 Da) using a 3rd order regression analysis to establish a calibration curve. The weight average molecular weight (Mw) is calculated for each sample from the calibration curve.

### Raw materials used:

In the examples, the following raw materials are used:
**Isooctyl acrylate** (IOA) is an ester of isooctyl alcohol and acrylic acid which is obtained from 3M Hilden, Germany.
**2**-**Ethylhexylacrylate** (2-EHA, C8-acrylate) is an ester of 2-ethylalcohol and acrylic acid which is obtained from BASF AG, Germany.
**Ethyl acrylate** (EA) is obtained from Sigma-Aldrich.
**2-Octylacrylate** is an ester of 2-octylalcohol and acrylic acid which is prepared as disclosed in preparative example 1 of US-B2-7,385,020.
**Acrylic acid** is obtained from 3M Hilden, Germany (AA).
**Isobornylacrylate** (SR 506D) is a monofunctional acrylic monomer available from Cray Valley, France.
**KRATON 1161-D** is a SIS linear block copolymer (15% S, 19% diblock), commercially available from Kraton Polymers, Inc. (Houston, Texas).
**KRATON D-1107** is a SIS linear block copolymer (15% S, 17% diblock), commercially available from Kraton Polymers, Inc. (Houston, Texas).
**SANTICIZER 141** is 2-ethylhexyl diphenyl phosphate, commercially available from Ferro Co. (Bridgeport, New Jersey).
**Regalrez 1126** is a low molecular weight, fully hydrogenated pure monomer C9 resin, commercially available from Eastman Chemical BV, NL.
**Regalrez 1094** is a low molecular weight, fully hydrogenated resin, commercially available from Eastman Chemical BV, NL.
**ESCOREZ 1310LC** is aliphatic C-5 tackifying resin, commercially available from ExxonMobil Chemical LTD. (Southampton, Hampshire, GB).
**SUPERESTER W-115** is a stabilized rosin acid ester, commercially available from Arakawa Chemical USA (Chicago, IL).
**REGALITE R1125** is a hydrogenated hydrocarbon resin, commercially available from Eastman Chemical Resins, Inc. (Kingsport, TX).
**CUMAR 130** is a coumarone indene resin, commercially available from Neville Chemical Co. (Pittsburgh, PA).
**PICCOLYTE A135** Polyterpene Resin is a polymer of alpha pinene, commercially available from Hercules Inc. (Wilmington, DE).
**1,6-Hexanedioldiacrylate** (HDDA) is a fast curing diacrylate and is obtained from 3M Hilden, Germany.
**Irgacure 651** (2,2 dimethoxy-1,2-diphenyl-ethanone) is a photoinitiator and is available from BASF, Germany.
**IRGANOX 1010** (Pentaerythritol tetrakis (3-(3,5-di-tert-butyl-4-hydroxyphenyl) propionate), commercially available from Ciba Specialty Chemical Co. (Tarrytown, NY). **Omnirad BDK** (2,2-dimethoxy-2-phenylacetophenone) is a UV-initiator and is available from iGm resins, Waalwijk Netherlands.
**XL-330** (2,4-bis(trichloromethyl)-6-(4-methoxyphenyl)-triazine) is a photocrosslinker and is obtained from 3M Company, St. Paul, MN.
**TINUVIN 328** (2-(2-hydroxy-3,5-di-(tert)-amylphenyl)benzotriazole), commercially available from Ciba Specialty Chemical Co. (Tarrytown, NY).
**NYPLAST 222B** is a naphthenic oil plasticizer, commercially available from Nynas Naphthenics AB (Stockholm, Sweden).
**INDOPOL H-8** is an isobutylene/butane copolymer having number average molecular weight of 320 and polydispersity of 1.65, and commercially available from BP Amoco Chemical Co. (Naperville, IL).
**INDOPOL H-50** is an isobutylene/butane copolymer having number average molecular weight of 800 and polydispersity of 1.60, and commercially available from BP Amoco Chemical Co. (Naperville, IL).
**3M Glass Bubbles** (K15), hollow glass bubbles with a diameter of 115 µm, commercially available by 3M Deutschland GmbH, Germany.
**DUALITE U010-185D,** expandable microspheres having a shell composition containing acrylonitrile and methacrylonitrile and a core of isopentane, and commercially available from Henkel Corporation (Gulph Mills, Pennsylvania).
**Aerosil R-972** are hydrophobic fumed silica particles, available from Evonik, Germany. **CPO 343-1** is a chlorinated polyolefin soluble in isobornylacrylate and commercially available by Eastman Chemical Products Inc., U.S.A.
**IOTG** (Isooctyl thioglycolate) is a chain transfer agent and commercially available from TCI, Tokyo Chemical Industry Co., Ltd., Tokyo, Japan.
**4900 CMB** is a black pigment having a 50/50 blend of carbon black in ethylene vinyl acetate copolymer resin having a melt index of about 150, and commercially available from MA Hanna Color (Suwanee, Georgia).

### A) Multilayer pressure sensitive adhesive foam tape examples having a first pressure sensitive adhesive and a second pressure sensitive adhesive layer according to composition 1, wherein the multilayer PSA tapes are made by wet-in-wet coating techniques.

Before preparing the liquid precursors used for the first or the second pressure sensitive adhesive layer, the high Tg (meth)acrylate copolymers, having the composition as shown in Table 1, are prepared as detailed below.

**Table 1**

| Raw materials | HTG-1 |
|---|---|
| Isobornylacrylate (IBOA) | 97 wt% |
| Acrylic acid (AA) | 3 wt% |
| Omnirad BDK | 1 (phr) |
| Isooctyl thioglycolate (IOTG) | 1 (phr) |

### Preparation of the high Tg (meth)acrylate copolymers

High Tg acrylic copolymers are prepared by mixing the high Tg monomer isobornyl acrylate (IBOA) with acrylic acid (AA), photoinitiator and chain transfer agent isooctyl thioglycolate (IOTG) as shown in Table 1. Then, approximately 28g of the high Tg copolymer mixture is filled into LDPE bags (commercially available by e.g. Zip Lock) having one of the either dimensions - 7.2 x 12.4 cm (small bag) or 9.9 x 17 cm (large bag) - and any air entrapments are forced out of the open bag. Nitrogen gas is then purged into the bags for at least 5 minutes and then the bags are closed. In a next step, the bags are immersed in a constant water bath at ca. 20°C and irradiated using a LAMAG UV lamp (366 nm, 1100 µW/cm2) for approx. 5-10 minutes on each side to produce copolymers having the weight average molecular weights Mw of between 23500 to 25500 g/mol as shown in Table 2. After synthesis, the obtained high Tg copolymers are hard (glass-like) and brittle on impact.

**Table 2**

| | Mw (g/mol) | Mw/Mn | Mass (g) | bag size | N₂ purge (min) | distance to lamp (cm) | irradiation time (min) |
|---|---|---|---|---|---|---|---|
| HTG-1a | 24700 | 1.86 | 28 | small | 5 | 5 | 10 |
| HTG-1b | 24400 | 1.73 | 28 | small | 10 | 10 | 8 |
| HTG-1c | 23600 | 1.74 | 28 | large | 10 | 10 | 8 |
| HTG-1d | 25000 | 1.96 | 20-30 | large | 5-10 | 5 | 5 |
| HTG-1e | 25600 | 1.78 | 20-30 | large | 5-10 | 5 | 5 |

### Preparation of the liquid precursors:

### 1. Preparation of the liquid precursors used for the first or the second pressure sensitive adhesive layer (LPS-1 to LPS-5)

The low Tg acrylic syrup is prepared by initially pre-polymerizing the selected acrylate and the acrylic acid (AA) monomers in a vessel containing 0.04 ppH photoinitiator and then exposing the mixture to ultraviolet radiation until a coatable syrup with a viscosity of about 11000 mPa.s (when measured with a Brookfield viscosimeter T = 25°C, spindle 4, 12 rpm) is obtained. Before the UV-exposure, the mixture is flushed 10 minutes with nitrogen and nitrogen is also bubbled to the mixture until the polymerization process is stopped by adding air to the syrup. All the time the mixture is stirred with a propeller stirrer (300U/min) and the reaction is stopped when a viscosity of about 11000 mPas is reached. Additional co-monomer(s), the remaining photoinitiator, hydrocarbon tackifier, the high Tg copolymer HTG-1 and the crosslinker are added to the syrup and mixed until they have dissolved completely.

An overview of all liquid precursors used for the first pressure sensitive adhesive layer (LPS-1 to LPS-5) is shown in Table 3.

**Table 3**

| | LPS-1 | LPS-2 | LPS-3 | LPS-4 | LPS-5 |
|---|---|---|---|---|---|
| | wt% | wt % | wt % | wt % | wt % |
| 2-EHA | 76.5 | 74 | 76.5 | 76.5 | 78 |
| AA | 2.5 | 5 | 2.5 | 2.5 | 2 |
| IBOA | 10 | 10 | 10 | - | 10 |
| IBOA/CPO (10/2) | | | | 12 | |
| HTG-1 | 10.66 | 10.66 | 10.66 | 10 | 10 |
| | phr | phr | phr | phr | phr |
| Irgacure 651 | | | | 0.2 | 0.2 |
| Omnirad | 0.2 | 0.2 | 0.2 | | |
| HDDA | 0.1 | 0.1 | 0.1 | 0.1 | |
| XL 330 | | | | | 0.1 |
| Regalrez 1094 | 10 | 10 | | | |
| Regalrez 1126 | | | 10 | 10 | 10 |

### 2. Preparation of liquid precursor of the polymeric foam layer (LPF-1 to LPF-3):

The liquid precursors of the polymeric foam layer, later referred to as LPF-1 to LPF-3 are prepared by combining the 90 wt% of 2-EHA and 10 wt. % of acrylic acid with 0.04 pph photoinitiator in a glass vessel or - in case of LPF-3 - 95 wt% of 2-OA and 5 wt% of acrylic acid with 0.04 ppH photoinitiator. Moreover, LPF-3 is additionally subjected to a frothing step as described in US 4,415,615 (Esmay et al.). Before the UV exposure is initiated, the mixture is flushed 10 minutes with nitrogen and nitrogen is also bubbled into the mixture the whole time until the polymerization process is stopped by adding air to the syrup. All the time the mixture is stirred with a propeller stirrer (300 U/min) and the reaction is stopped when a viscosity of about 2000 mPas is reached (when measured with a Brookfield viscosimeter, T = 25 °C, spindle 4, 12 rpm). Additional 0.16 ppH photoinitiator, 0.1 ppH crosslinker, optionally Aerosil R-972 and optionally glass bubbles K15 are added to the syrup and mixed until they have dissolved/dispersed. The compositions of LPF-1 to LPF-3 are shown in Table 4.

**Table 4**

| | LPF-1 | LPF-2 | LPF-3 |
|---|---|---|---|
| 2-EHA | 90 | 90 | |
| 2-OA | | | 95 |
| AA | 10 | 10 | 5 |
| Aerosil R-972 | 3 | | |
| Omnirad BDK | 0.2 | 0.2 | |
| Irgacure 651 | | | 0.2 |
| HDDA | 0.1 | 0.1 | 0.06 |
| K15 glass bubbles | 6 | | |

### Making of multilayer pressure sensitive adhesive foam tape example Ex.1

For making Ex.1 the liquid precursors of the first pressure sensitive adhesive layer (LPSA 1), the polymeric foam layer (LPFL), and the second pressure sensitive adhesive layer (LPSA2) are superimposed onto each other in a lab coater, according to the method described in WO-A1-2011094385 (Hitschmann et al.). Hereby, the liquid precursor of the first pressure sensitive adhesive layer is coated on the bottom of the polymeric foam layer, and the liquid precursor of the second pressure sensitive adhesive layer is coated on the top of the polymeric foam layer. The knife height setting is 130-140 µm for the first knife (for the first and the second pressure sensitive adhesive layer) and 1240-1250 µm for the second knife (for the polymeric foam layer), both levels calculated from the substrate surface. The lab coater is connected to a UV curing station of 3 m length, where zones of different UV-intensities can be realized. The UV-radiation cures the tape from both its top and bottom side. Hereby in all zones the intensity from top and bottom side is set at equal levels. The total radiation intensities (top + bottom) and the length of the different zones are listed in Table 5 below.

**Table 5**

| | Zone 1 Length (200 cm) | Zone 2 (length 100 cm) |
|---|---|---|
| Total intensity [mW(cm²] | 2.07 | 4.27 |

The multilayer pressure sensitive adhesive foam tape construction is coated on 75 µm solvent free siliconized PET-liners (SLVK-Liner having a dimension of 300mm x 300 mm).

### Making of multilayer pressure sensitive adhesive foam tape examples Ex.2-Ex.7.

For the making of Ex.2 to Ex.7, the liquid precursors of the first pressure sensitive adhesive layer (LPSA-1), the polymeric foam layer (LPFL), and the second pressure sensitive adhesive layer (LPSA-2) are superimposed onto each other in a coater, according to the method described in EP0259094 (Zimmerman et al.). Hereby, the liquid precursor of the polymeric foam layer is coated on the first pressure sensitive adhesive layer, and the liquid precursor of the second pressure sensitive adhesive layer is coated on the polymeric foam layer. In the setup, the liquid precursor of the first and the second pressure sensitive adhesive layer are individually knife coated with a knife gap setting of 125µm, whereas the precursor of the polymeric foam layer is coated with a knife gap setting resulting to a combined caliper of the three liquid precursor layers of about 1350 µm. These liquid precursor layers are then simultaneously subjected to ultraviolet radiation from a UV curing station, thus photopolymerizing the monomers to provide multilayer pressure sensitive adhesive tape examples. The UV curing station is of 3 m length, where zones of different UV-intensities can be realized. The UV-radiation cures the tape from both its top and bottom side. Hereby in all zones the intensity from top and bottom side is set at equal levels. The total radiation intensities (top + bottom) and the length of the different zones are previously listed in Table 5.

A complete overview of all multilayer pressure sensitive adhesive foam tape examples are shown in Table 6.

**Table 6**

| Ex.No | LPSA-1 | LPF-L | LPSA-2 | Made according to method described in |
|---|---|---|---|---|
| Ex.1 | LPS-1 | LPF-1 | LPS-1 | WO 2011094385 |
| Ex.2 | LPS-1 | LPF-1 | LPS-1 | EP0259094 |
| Ex.3 | LPS-2 | LPF-1 | LPS-2 | EP0259094 |
| Ex.4 | LPS-1 | LPF-2 | LPS-1 | EP0259094 |
| Ex.5 | LPS-3 | LPF-1 | LPS-3 | EP0259094 |
| Ex.6 | LPS-4 | LPF-1 | LPS-4 | EP0259094 |
| Ex.7 | LPS-5 | LPF-3 | LPS-5 | EP0259094 |

### B) Multilayer pressure sensitive adhesive foam tape examples having a first pressure sensitive adhesive and a second pressure sensitive adhesive layer according to composition 2, wherein the multilayer PSA tapes are made by hotmelt co-extrusion techniques.

### Preparation of Acrylic Polymers:

Acrylic Polymer 1 (AP-1) is prepared by mixing 45 parts of IOA; 45 parts of BA; 10 parts of AA; 0.15 part IRGACURE 651; and 0.06 part of IOTG. Discreet film packages are formed from a packaging film (0.0635 mm thick ethylene vinyl acetate copolymer film sold as VA-24 Film from CT Film, Dallas, Texas). The AP-1 composition is sealed into the film packages, which measured approximately 10 centimeters (cm) by 5 cm by 0.5 cm thick. While immersed in a water bath maintained between about 21°C and about 32°C, the packages are exposed to ultraviolet (UV) radiation having an intensity of about 3.5 milliWatts per square centimeter (mW/sq cm), and a total energy of about 1680 milliJoules per square centimeter (mJ/sq cm) as measured in NIST units. The method of forming the packages and curing is described in Example 1 of U.S. Patent No. 5,804,610, the subject matter of which is incorporated herein by reference in its entirety.

Acrylic Polymer 2 (AP-2) is prepared according to the procedure for AP-1, except that 85 parts of 2-EHA; 15 parts of AA; 0.15 part IRGACURE 651 and 0.8 part IOTG are used. Similarly, Acrylic Polymer 3 (AP-3) is prepared according to the procedure for Acrylic Polymer 1 except that the composition is 95 parts of 2-EHA; 5 parts of AA; 0.15 part IRGACURE 651; and 0.03 part of IOTG. The compositions for AP-2 and AP-3 are placed in packages and exposed to UV energy, according to the procedure for AP-1.

### Preparation of the first pressure sensitive adhesive layer:

Pressure-sensitive adhesives according to the compositions shown in Table 7 are compounded using a 60 mm, co-rotating twin screw extruder (available from Berstorff), (the "first adhesive extruder"). A polymodal, asymmetric star block copolymer ("PASBC") is prepared according to U.S. Patent No. 5,393,787 or US 5,296,547, the subject matter of which is hereby incorporated by reference in its entirety. The polymer has number average molecular weights of about 4,000 Dalton and about 21,500 Dalton for the two endblocks, 127,000 - 147,000 Dalton for the arm, and about 1,100,000 Dalton for the star measured by SEC (size exclusion chromatography) calibrated using polystyrene standards. The polystyrene content is between 9.5 and 11.5 percent by weight. The mole percentage of high molecular weight arms is estimated to be about 30 %.

The polymodal asymmetric block copolymer and a linear styrene-isoprene-styrene (SIS) block copolymer (KRATON 1161-D) are dry fed into the first zone of the first adhesive extruder. Using a roll-feed extruder (available from Berstorff), either acrylic polymer AP-1 or AP-2 is heated and fed into the third zone of the first adhesive extruder. Antioxidant (IRGANOX 1010), ultraviolet light absorber (TINUVIN 328), pigmented EVA (4900 CMB) are dry fed; and (REGALITE R1125); (CUMAR 130); and (NYPLAST 222B) are melt fed into various zones of the first adhesive extruder.

**Table 7: First pressure sensitive adhesive compositions (Weight Percent), wherein (*) stands for polymodal, asymmetric star block copolymer.**

| | First pressure sensitive adhesive layer | | |
|---|---|---|---|
| | ADH-1 | ADH-2 | ADH-3 |
| PASBC* | 31.80 | 33.19 | 31.80 |
| Kraton 1161-D | 13.63 | 14.23 | 13.63 |
| Regalite R1125 | 26.98 | 32.89 | 26.98 |
| Cumar 130 | 17.99 | 10.97 | 17.99 |
| Nyplast 222B | 6.50 | 5.50 | 0 |
| Indopol H-8 | 0 | 0 | 6.50 |
| IRGANOX 1010 | 1.36 | 1.42 | 1.36 |
| TINUVIN 328 | 1.36 | 1.42 | 1.36 |
| CMB 4900 | 0.38 | 0.38 | 0.38 |

### Preparation of the second pressure sensitive adhesive layer:

A pressure sensitive adhesive is compounded in a 60 mm, co-rotating twin screw extruder (available from Berstorff) (the "second adhesive extruder") in a similar manner as described for the first pressure sensitive adhesives, except that the composition is as follows: 12.70% of the polymodal, asymmetric star block copolymer (PASBC); 53.10% (by weight) AP-1; 23.30% tackifying resin (ESCOREZ 1310LC); 3.80% tackifying resin (SUPERESTER W115); 6.20% plasticizer (SANTICIZER 141); 0.26% antioxidant (IRGANOX 1010); and 0.25% ultraviolet light absorber (TINUVIN 328).

### Preparation of the polymeric foam layers:

Polymeric foam layers (FC1 - FC2) having the compositions shown in Table 8 are compounded according to the following procedure. Black pigmented EVA (4900 CMB) is dry fed in to the first zone of a 90 mm, co-rotating twin screw extruder (the "backing extruder") (available from Berstorff, Hannover, Germany). Using a roll-feed extruder (available from Berstorff), both acrylic polymers AP-2 and AP-3 are heated and fed into the second zone of the backing extruder. DUALITE U010-185D expandable microspheres are fed into the ninth zone of the backing extruder.

**Table 8: Polymeric foam compositions and properties.**

| | Component Parts By Weight Percent (%) | | | | Foam Density | Thickness |
|---|---|---|---|---|---|---|
| Composition | AP-3 | AP-2 | Microspheres | Pigment | g/cm³ | mm |
| FC-1 | 90.22 | 6.6 | 2.8 | 0.38 | 0.54 | 0.99 |
| FC-2 | 86.33 | 9.59 | 3.7 | 0.38 | 0.54 | 0.98 |

### Making of multilayer pressure sensitive adhesive foam tape examples Ex.8 - Ex. 10.

Three-layer co-extruded multilayer PSA foam tape samples are prepared by coextruding a first PSA layer, a polymeric foam layer as the middle layer, and a second PSA layer. Examples 8-10 use exemplary adhesives according to some aspects of the present disclosure (ADH-1 through ADH-3). The multilayer PSA tape constructions are described in Table 9 below.

The second PSA is compounded in the second adhesive extruder, as described above, and fed through an outer layer of a three-layer, multi-manifold film die obtained from Cloeren Inc. (Orange, Texas). A polymeric foam layer composition is compounded in the backing extruder, as described above, and fed to the center layer of the three-layer die. A first pressure sensitive adhesive is compounded in the first adhesive extruder, as described above, and fed to the outer layer of the three-layer die, opposite the second pressure sensitive adhesive.

Upon exiting the die, the co-extruded layers are cast onto a silicone release coated casting roll. The roll is cooled with water having a temperature of about 12°C. The cooled extrudate is transferred from the casting roll, via a silicone release coated rubber belt, to a 0.117 mm thick, two-side silicone-coated, polyethylene release liner that is transported at the same speed as the casting roll to the end of the web transport line. The first pressure sensitive adhesive is in contact with the liner after the transfer whereas the second pressure sensitive adhesive is open to the air. The liner has differential release properties which allow the tape to be unrolled after winding without liner confusion. Release liners are well-known in the art, and any known release liner may be used. Typically, the release liner comprises a film or paper substrate coated with a release material. Commercially available release liners include, but are not limited to, silicone coated papers, and silicone coated films, such as polyester films. Suitable release liners are also disclosed in U.S. Patents Nos. 6,835,422; 6,805,933; 6,780,484; and 6,204,350 assigned to 3M Innovative Properties Company.

The polymeric foam layer and both first and second pressure sensitive adhesives are crosslinked on-web using electron beam curing while supported on the liner. Two sequential irradiation steps acting on opposite faces of the tape are employed. The first pressure sensitive adhesive is irradiated through the polyethylene liner, whereas the second pressure sensitive adhesive is irradiated in an open-face condition. The electron beam units are BROADBAND curtain-type electron beam processors (PCT Engineered Systems, LLC, Davenport, IA), operated according the acceleration voltage and dose conditions provided in Table 9.

**Table 9: Compositions of multilayer pressure sensitive adhesive foam tapes.**

| | | | First PSA | | Second PSA | |
|---|---|---|---|---|---|---|
| Ex. | First and second PSA | Polymeric Foam | Acceleration voltage (keV) | Dose (Mrad) | Acceleration voltage (keV) | Dose (Mrad) |
| 8 | ADH-1 | FC-2 | 247 | 11.5 | 235 | 10 |
| 9 | ADH-2 | FC-3 | 245 | 11.5 | 230 | 10 |
| 10 | ADH-3 | FC-3 | 245 | 11.5 | 230 | 10 |

### Making of multilayer pressure sensitive adhesive foam tape examples Ex.11 - Ex.14

Three-layer co-extruded pressure sensitive adhesive foam tape samples Ex.11 - Ex.14 are prepared similarly to the procedure of Ex.8 - Ex.10, with the exception of co-extruding two pressure sensitive adhesive layers (first PSA and second PSA layers) having the adhesive compositions (ADH-4, ADH-5, ADH-6, and ADH-7) shown in Table 10 with the FC2 polymeric foam as the middle layer. Both pressure sensitive adhesive layers are fed from the same extruder to the outer layers of the three layer die. Samples approximately 25cm x 76cm are cut from the adhesive web and second piece of liner applied to the open-face side of the tape. The samples are then e-beamed after approximately 3 hours dwell at ambient condition. Both sides of the test specimens are irradiated equally through the protective liners.

**Table 10: First and the second pressure sensitive adhesive compositions (Weight Percent).**

| Component | ADH-4 | ADH-5 | ADH-6 | ADH-7 |
|---|---|---|---|---|
| PASBC* | 26.73 | 26.73 | 26.21 | 26.82 |
| Kraton 1107 | 14.39 | 14.39 | 14.11 | 14.44 |
| Piccolyte A135 | 34.55 | 39.48 | 48.39 | 49.5 |
| Arakawa W 115 | 14.81 | 9.87 | 0 | 0 |
| Nyplast 222B | 5.96 | 5.96 | 0 | 6.02 |
| Indopol H50 | 0 | 0 | 8.06 | 0 |
| IRGANOX 1010 | 1.65 | 1.65 | 1.62 | 1.62 |
| TINUVIN 328 | 1.65 | 1.65 | 1.62 | 1.62 |
| CMB 4900 | 0.25 | 0.25 | 0 | 0 |

## Claims

1. A method of adhering a first part to a second part, wherein the first part and the second part are used for outdoor applications and comprise a thermoplastic or a thermosetting organic polymer, and wherein the method comprises the steps of:
a) providing a multilayer pressure sensitive adhesive foam tape comprising:
i. a polymeric foam layer comprising two major surfaces;
ii. a first pressure sensitive adhesive layer adjacent to one major surface of the polymeric foam layer;
iii. a second pressure sensitive adhesive layer adjacent to the polymeric foam layer on the major surface which is opposed to the major surface or the polymeric foam layer adjacent to the first pressure sensitive adhesive layer, and wherein the first pressure sensitive adhesive layer, the polymeric foam layer and the second pressure sensitive adhesive layer are superimposed;
b) adhering the first pressure sensitive adhesive layer to the first part; and
c) adhering the second part to the second pressure sensitive adhesive layer;
wherein the first pressure sensitive adhesive layer and the second pressure sensitive adhesive layer both have a composition selected from either:
A) composition (1) comprising:
a) 60 parts by weight or greater of a low Tg (meth)acrylate copolymer (component) comprising:
i. C₁-C₃₂ (meth)acrylic acid ester monomer units;
ii. optionally, acid functional ethylenically unsaturated monomer units;
iii. optionally, non-acid functional, ethylenically unsaturated polar monomer units;
iv. optionally, vinyl monomer units; and
v. optionally, multifunctional (meth)acrylate monomer units, and
b) up to 40 parts by weight of a high Tg (meth)acrylate copolymer having a weight average molecular weight (Mw) of above 20,000 Daltons, and comprising:
i. high Tg (meth)acrylic acid ester monomer units;
ii. optionally, acid functional ethylenically unsaturated monomer units;
iii. optionally, low Tg (meth)acrylic acid ester monomer units;
iv. optionally, non-acid functional, ethylenically unsaturated polar monomer units;
v. optionally, vinyl monomer units;
vi. optionally, a chlorinated polyolefinic (co)polymer; and
c) optionally, up to 20 parts by weight of a hydrogenated hydrocarbon tackifier, based on 100 parts by weight of copolymers a) and b);
or;
B) composition (2) comprising:
a) a linear block copolymer of the formula R - (G)m, wherein m is 1 or 2;
b) a multi-arm block copolymer of the formula Qn-Y, wherein:
i. Q represents an arm of the multi-arm block copolymer and each arm independently has the formula G-R,
ii. n represents the number of arms and is a whole number of at least 3; and
iii. Y is the residue of a multifunctional coupling agent; wherein each R is a rubbery block comprising a polymerized conjugated diene, a hydrogenated derivative of a polymerized conjugated diene, or combinations thereof; and each G is a glassy block comprising a polymerized monovinyl aromatic monomer;
c) a first high Tg tackifier having a Tg of at least 60 degrees C, wherein the first high Tg tackifier is primarily compatible with the rubbery blocks;
d) a second high Tg tackifier having a Tg of at least 60 degrees C, wherein the second high Tg tackifier is primarily compatible with the glassy blocks; and
e) at least one component selected from the group consisting of a low Tg tackifier, a plasticizer, and combinations thereof.

2. A method according to claim 1, wherein the first part and the second part are exposed to weathering conditions, in particular wind, rain, and extreme temperatures.

3. A method according to any of the preceding claims, wherein the first part and the second part are exposed to headwind and/or tailwind, in particular frontal headwind.

4. A method according to any of the preceding claims, wherein the first part and the second part are used for exterior applications selected from the group of automotive, construction, traffic signage, and graphic signage applications.

5. A method according to any of the preceding claims, wherein the first part and the second part are used for exterior applications, and are independently selected from the group consisting of cladding, exterior trims, pillar trims, emblems, rear mirror assemblies, spoilers, front spoiler lips, grip molding for trunk lids, hood extensions, wheel arches, body side molding and inlays, tail light assemblies, sonar brackets, license plate brackets, fenders, fender modules, front grilles, headlight cleaning brackets, antennas, roof ditch moldings, roof railings, sunroof frames, front screen moldings, rear screen moldings, side wind visors, automotive body parts, architectural panels, structural glazing, traffic signs, informative and advertising panels, reflectors and linear delineation systems (LDS), raised pavement markers, platforms or display supports bearing visually observable information, and combinations thereof.

6. A method according to any of the preceding claims, wherein the thermoplastic or thermosetting organic polymer is selected from the group consisting of polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); clear coat surfaces, in particular clear coats for vehicles like a car or coated surfaces for industrial applications; and any combinations or mixtures thereof.

7. A method according to any of the preceding claims, wherein the polymeric foam layer comprises a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

8. A method according to any of the preceding claims, wherein the polymeric foam layer comprises a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

9. A method according to any of the preceding claims, wherein the multilayer adhesive foam tape is obtained by a method selected from the group consisting of hotmelt co-extrusion and wet-in-wet coating.

10. A composite assembly comprising:
a) a first part and a second part used for outdoor applications and comprising a thermoplastic or a thermosetting organic polymer; and
b) a multilayer pressure sensitive adhesive foam tape as described in any of claims 1 to 9, wherein the first pressure sensitive adhesive layer is adhered to the first part, and the second pressure sensitive adhesive layer is adhered to the second part.

11. Use of a multilayer pressure sensitive adhesive foam tape as described in any of claims 1 to 9 for adhering a first part to a second part, wherein the first part and the second part are used for outdoor applications and comprise a thermoplastic or a thermosetting organic polymer.

12. Use according to claim 11, wherein the first part and the second part are exposed to weathering conditions, in particular wind, rain, and extreme temperatures.

13. Use according to any of claim 11 or 12, wherein the first part and the second part are exposed to headwind and/or tailwind, in particular frontal headwind.

14. Use according to any of claims 11 to 13, wherein the first part and the second part are exposed to temperatures above 50°C, above 70°C, above 90°C, or even above 100°C.

15. Use according to any of claims 11 to 14, wherein the first part and the second part are exposed to temperatures below 0°C, below -10°C, below -20°C, below -30°C, or even below -40°C.
